# EUROPÄISCHE PATENTSCHRIFT

(11) **EP 0 620 923 B1**
(45) Veröffentlichungstag und Bekanntmachung des Hinweises auf die Patenterteilung: **13.02.2002**
(21) Anmeldenummer: 93923433.2
(22) Anmeldetag: 03.11.1993
(51) Int. Cl.: G01S 13/02

(54) **VERFAHREN UND SCHALTUNGSANDORDNUNG ZUR DATENÜBERTRAGUNG ZWISCHEN ZWEI STATIONEN**
PROCESS AND CIRCUIT FOR DATA TRANSFER BETWEEN TWO STATIONS
PROCEDE ET CIRCUIT POUR LA TRANSMISSION DE DONNEES ENTRE DEUX STATIONS

(30) Priorität: 06.11.1992 CH 344392; 27.04.1993 CH 128093; 20.07.1993 CH 218793; 23.08.1993 CH 250193; 17.09.1993 CH 280893
(43) Veröffentlichungstag der Anmeldung: 26.10.1994
(73) Patentinhaber: Siemens Schweiz AG, 8047 Zürich (CH)
(72) Erfinder: BÄCHTIGER, Rolf, CH-8966 Oberwil-Lieli (CH); LODER, Max, CH-8906 Bonstetten (CH); REINDL, Leonhard, D-83134 Prutting (DE); DILL, Roland, D-81547 München (DE); RUILE, Werner, D-80636 München (DE); MAGORI, Valentin, D-81539 München (DE); RUPPEL, Clemens, D-81479 München (DE)
(74) Vertreter: Zedlitz, Peter, Dipl.-Inf.
(86) Internationale Anmeldenummer: CH9300252
(87) Internationale Veröffentlichungsnummer: WO9411754

(56) Entgegenhaltungen:
- EP-A- 0 354 075
- EP-A- 0 507 078
- US-A- 4 513 288
- US-A- 5 115 160
- SKOLNIK 'introduction to radar systems' 1981 , MCGRAW-HILL , SINGNAPORE siehe Seite 422, Absatz 3 - Seite 426, Absatz 1; Abbildungen 15-17
- ELECTRONIC DESIGN Bd. 38, Nr. 8 , 26. April 1990 , HASBROUCK HEIGHTS USA JOHN GOSCH 'SAW technology drives auto id, road-toll system' in der Anmeldung erwähnt

## Beschreibung

Die vorliegende Erfindung betrifft ein Verfahren nach dem Oberbegriff des Patentanspruchs 1 und ein Übertragungssystem nach dem Oberbegriff des Patentanspruchs 6.

Aus John Gosch, SAW TECHNOLOGY DRIVES AUTO ID, ROAD-TOLL SYSTEM, ELECTRONIC DESIGN vom 26. April 1990, Seite 29 ist der Einsatz von OFW bzw. SAW (Oberflächenwellen bzw, surface acoustic waves) - Bauteilen zur Identifikation von Automobilen bekannt, die eine Kontrollstation passieren. Das OFW-Bauteil ist dabei in der Lage, ein eintreffendes Signal in eine Oberflächenwelle umzuwandeln, die sich über die Oberfläche des OFW-Bauteils ausbreitet. Auf der Oberfläche des OFW-Bauteils sind elektroakustische Wandler und Reflektoren vorgesehen, die in der Lage sind, einen Teil der an ihnen vorbeilaufenden Oberflächenwellen wieder in elektrische Signale umzuwandeln. Jedes zu identifizierende Automobil weist dabei ein OFW-Bauteil auf, bei dem eine bestimmte Anzahl Reflektoren in bestimmten Abständen zueinander derart auf der Oberfläche des OFW-Bauteils aufgebracht sind, dass sich dieses OFW-Bauteil von allen weiteren in anderen Automobilen verwendeten OFW-Bauteilen deutlich unterscheidet. Diese bestimmte geometrisch einmalige Anordnung der Reflektoren führt auch zu einem elektrischen Verhalten, das für jedes OFW-Bauteil typisch ist. D.h. jedes OFW-Bauteil, das mit einem festgelegten Abfragesignal beaufschlagt wird, sendet von den einzelnen Reflektoren Signale an die Abfragestation zurück. Durch die für jedes OFW-Bauteil typische Anordnung der Reflektoren werden die einzelnen Antwortsignale ebenfalls mit entsprechend typischen Verzögerungen an die Abfragestation zurückgesandt. Die von einem OFW-Bauteil nach Erhalt des Abfragesignals abgegebene Antwort, die in Form von mehreren zeitlich gegeneinander verschobenen Signalen erfolgt, unterscheidet sich daher ebenfalls deutlich von Antworten, die von anderen OFW-Bauteilen abgegeben werden. Fig. 5 zeigt einen möglichen Verlauf der Antwortsignale, die vom Bauteil OFW als Antwort auf einen Abfragepuls abgegeben werden. Als Antwort auf einen einzelnen Abfragepuls retoumiert das OFW-Bauteil nach einer zeitlichen Verzögerung demgemäss eine Folge von zeitlich gegeneinander verschobenen Pulsen, die als Codewort zur Abfragestation gelangen.

Aus der US-A-5 115 160 ist ein solches OFW-Bauteil bekannt, dessen Substrat mit Reflexionsstellen versehen ist, von denen wenigstens eine Reflexionsstelle zur Einspeisung uncodierter und wenigstens eine Reflexionsstelle zur Auskopplung codierter Signale verwendet wird, die in Form einer Pulssequenz von einem Interrogator abrufbar sind. Diese Pulssequenz korrespondiert zu einem "informational code", der dem Transponder vor dessen Inbetriebnahme aufgeprägt wurde. In der US-A-5 115 160 erfolgt diese Prägung nicht durch individuelle Positionierung der Reflektoren auf dem Substrat, sondern durch die Aktivierung einzelner Reflektoren durch die bleibende Zerstörung von schmelzbaren Verbindungsleitungen. Nach der Programmierung des OFW-Bauteils wird die Pulssequenz bzw. die Codierung nicht mehr verändert.

Nachteilig bei diesen Identifikationsverfahren ist, dass bei jeder Abfrage jeweils nur die Abgabe eines unveränderlichen Erkennungssignals ausgelöst wird. Die wechselseitige Übertragung von zusätzlichen, wahlweise festlegbaren Daten zwischen der Abfrage- und der Empfangsstation ist nicht vorgesehen. Dabei ist zu erwarten, dass sich der Bedarf an Kommunikationsmöglichkeiten in den nächsten Jahren rapid erhöhen wird. Ferner ist bei dem oben beschriebenen Identifikationsverfahren keine genaue Positionsbestimmung des zu Identifizierenden Fahrzeuges möglich. Eine genaue Positionsbestimmung ist jedoch erforderlich, sobald die Anforderungen an die Fähigkeiten des Identifikationssystems ansteigen. Das Identifikationssystem wird dadurch zum Leitsystem, d.h. dem vorbeifahrenden Fahrzeug kann z.B. eine Information mit momentaner Bedeutung (Strassenzustand, Umfahrungsempfehlung, Richtgeschwindigkeit, etc.) übermittelt werden.

Der vorliegenden Erfindung liegt daher die Aufgabe zugrunde, ein Verfahren und ein Übertragungssystem zu dessen Durchführung anzugeben, mit dem wahlweise veränderliche und unveränderliche Daten zwischen zwei im Kontakt miteinander stehenden Stationen übertragen werden können, von denen zumindest eine eine mit Reflexionsstellen versehene Verzögerungsleitung aufweist. Der Informationsgehalt der übertragenen Signale und die Sicherheit, dass die Informationen nur an die dafür bestimmte Station gesendet werden, sollen dabei möglichst hoch sein. Ferner soll auch bei kleiner Sendeleistung eine einwandfreie Qualität der übertragenen Datensignale gewährleistet werden.

Diese Aufgabe wird durch die in den Patentansprüchen 1 und 6 angegebenen Massnahmen gelöst.

Ein weiterer Aspekt der Aufgabe liegt darin, die Reflektoren eines Oberflächenwellenbauteils derart zu Aktivieren bzw. zu Deaktivieren, dass sich das Reflexionsverhalten dieser Reflektoren genau einstellen bzw. optimieren lässt. D.h. die Grenzwerte für die maximal und die minimal reflektierte Energie sollen erweitert werden. Ferner soll der Anteil reflektierter Energie frei wählbar sein.

Das erfindungsgemässe Verfahren erlaubt die Übertragung von unveränderlichen und veränderlichen Daten zwischen zwei Stationen, von denen mindestens eine mit einer mit mehreren Reflexionsstellen versehenen Verzögerungsleitung, vorzugsweise mit einem OFW-Bauteil ausgerüstet ist. Der Mehraufwand zur Übertragung der veränderlichen Daten ist gering. Innerhalb der zur Verfügung stehenden relativ kurzen Übertragungszeit wird eine verhältnismässig grosse Datenmenge übertragen. Ferner werden die Daten vorzugsweise mit einer minimalen Sendeleistung übertragen, wodurch z.B. durch Fremdantworten hervorgerufene Störungen des Datenverkehrs zwischen den beiden Stationen oder Störungen weiterer Empfangseinheiten vermieden werden können. Selbstverständlich wirkt sich die reduzierte Sendeleistung auch bei der Dimensionierung der Sendestufen günstig aus.

Diese Abfragetechnik kann bei der Kontrolle, Überwachung und Leitung von weiteren Verkehrsmitteln (Bus, Bahn, Schiff oder im Bereich der Bodenkontrolle für Flugzeuge) verwendet werden. Z.B. können Flugzeuge vor oder nach dem Andocken automatisch identifiziert werden. Ferner besteht die Möglichkeit durch verschiedene Abfragestellen die Position des Flugzeuges auf dem Flughafengelände festzustellen sowie den Status (z.B. Betriebsdaten, technische Daten) des Flugzeuges automatisch abzufragen und in einem für die Logistik vorgesehenen Computer zu speichern. Besonders vorteilhaft kann diese Abfragetechnik auch bei der Bahn eingesetzt werden. Entlang den Geleisen können z.B. mit einem OFW-Bautell versehene Antwortstationen R vorgesehen werden, die von einer in einer stehenden oder bewegten Zugskomposition vorgesehenen Abfragestation Q abgefragt werden können.

Probleme können dabei entstehen, falls mehrere nicht zentral gesteuerte Abfragestationen nahe beieinander betrieben werden. Wenn z.B. eine erste Abfragestation Q, die einen Abfragepuls ausgesendet hat, während einem Zeitintervall Tr auf Empfang geschaltet wird und eine zweite Abfragestation Q während diesem Zeitintervall Tr einen Abfragepuls aussendet, so besteht die Gefahr, dass die Abfragestation Q anstatt eines Antwortsignals von einer zugehörigen Antwortstation R ein Abfragesignal der fremden Abfragestation Q aufnimmt. Derartige Verhältnisse können z.B. in grösseren Bahnhöfen beim gleichzeitigen Eintreffen mehrerer Züge oder auf dem Flughafengelände bei der Verwendung nahe zueinander gelegener Abfragestationen Q auftreten. Ferner besteht die Gefahr, dass die zweite Abfragestation Q Antwortsignale empfängt, die von der ersten Abfragestation Q abgefragt wurden.

Dieses Verfahren erlaubt den gleichzeitigen Betrieb mehrerer Abfragestationen Q, die Abfragepulse aussenden, ohne dass gegenseitige Störungen auftreten. Das Verfahren ermöglicht daher eine hohe Betriebssicherheit des aus allen Abfrage- und Antwortstationen bestehenden Kommunikationssystems. Das Verfahren ermöglicht zudem mehreren Abfragestationen, gleichzeitig auf eine einzelne Antwortstation zuzugreifen, ohne dass gegenseitige Störungen auftreten. Ferner ist ein Verfahren angegeben, durch das eine Steigerung der Datenübertragungsrate erzielt werden kann.

Die Erfindung wird nachfolgend anhand einer Zeichnung beispielsweise näher erläutert. Dabei zeigt:
- Fig. 1: eine erfindungsgemässe Sende- und Empfangsstation, die als Abfragestation dient
- Fig. 2: eine weitere Abfragestation
- Fig. 3: als Antwortstationen dienende erfindungsgemässe Sende- und Empfangsstationen, die mit einem OFW-Bauteil versehen sind
- Fig. 4a: eine Abfragestation, die zur Abgabe expandierter Pulse vorgesehen ist
- Fig. 4b: zur Standortbestimmung geeignete Abfrage- und Antwortstationen
- Fig. 4c: eine Diskriminatorkennlinie
- Fig. 4d: eine zur Standortbestimmung geeignete Abfragestation
- Fig. 4e: eine universell einsetzbare Antwortstation
- Fig. 5: einen möglichen Signalverlauf von Abfrage- und Antwortsignalen
- Fig. 6: eine Verzögerungsleitung mit keramischem Dielektrikum
- Fig. 7: eine zur Synchronisation der Sendepulse geeignete Abfragestation
- Fig. 8: von zwei Abfragestationen abgegebene Sequenzen von Sendepulsen
- Fig. 9: zwei schienengebundene parallelgeführte Fahrzeuge, die eine an einem der Geleise vorgesehene Antwortstation passieren
- Fig. 10: eine Abfragestation, die zur Abgabe und zum Empfang von Pulsen unterschiedlicher Frequenzlage vorgesehen ist

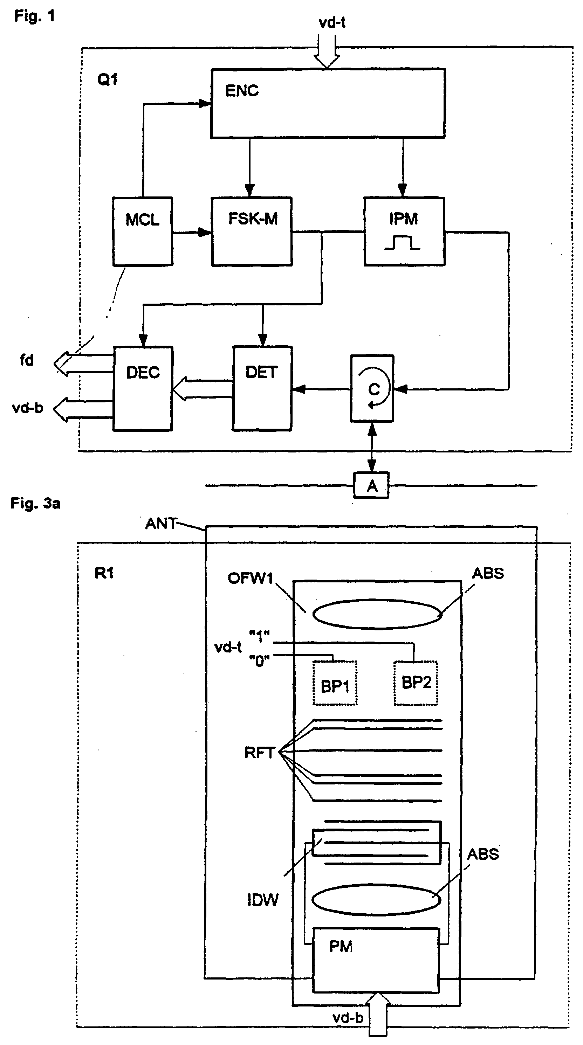

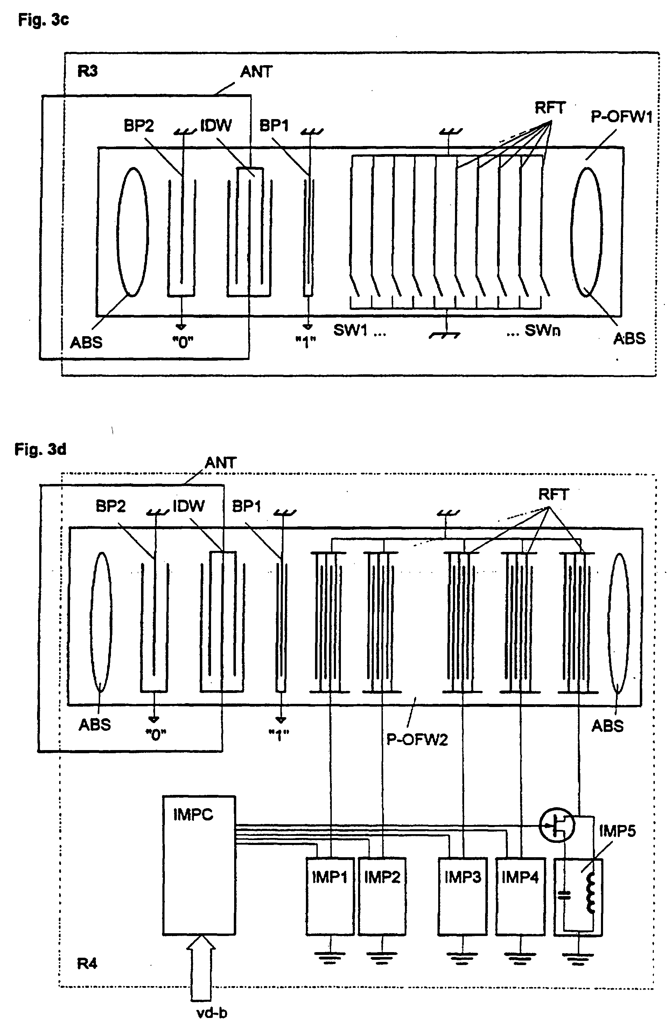

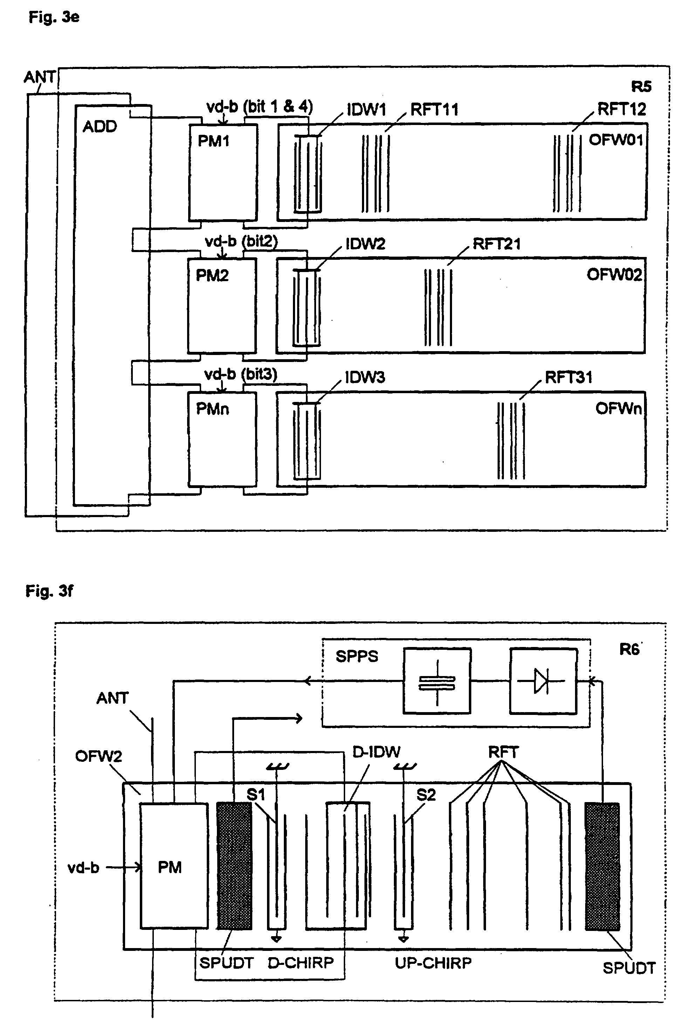

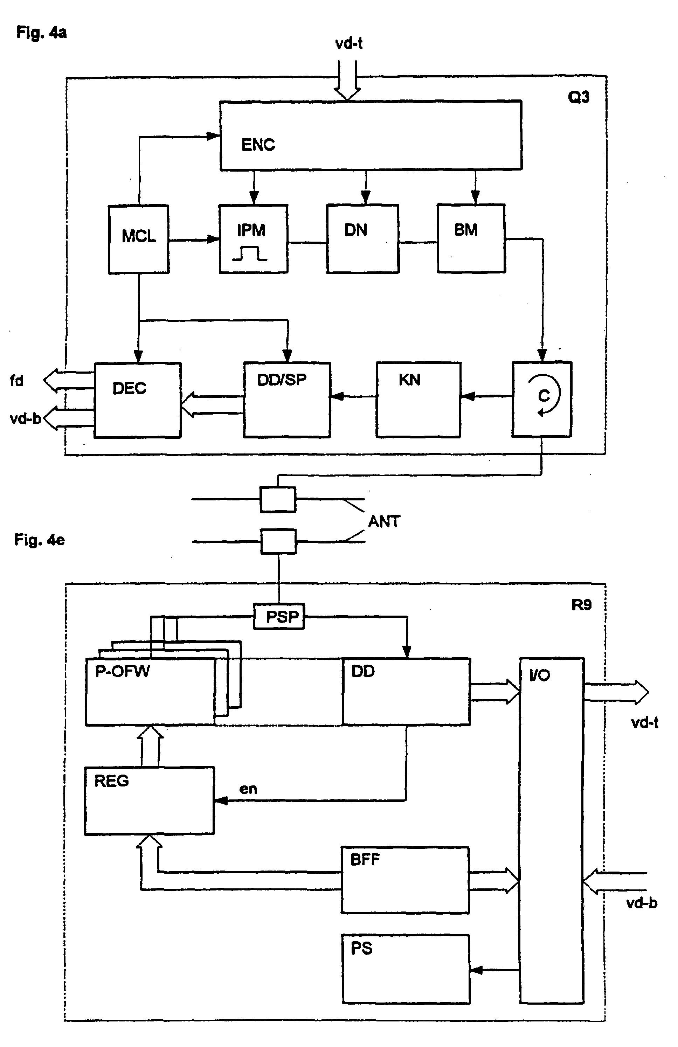

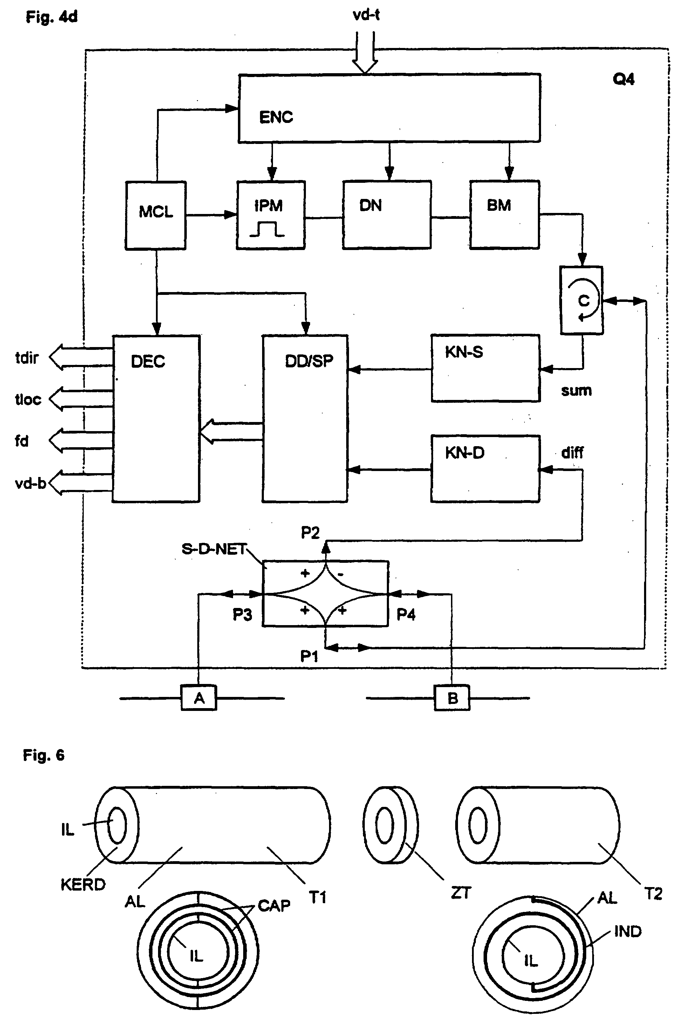

Fig. 1 zeigt eine Abfragestation Q1, die zur Abgabe von Abfragesignalen und zum Empfang von Antwortsignalen vorgesehen ist. In Fig. 3a, 3c, 3d und 3e sind korrespondierende Antwortstationen R1, R3, R4 und R5 dargestellt, die zum Empfang von Abfragesignalen und zur Abgabe von Antwortsignalen vorgesehen sind. In Fig. 4a und 4d sind Abfragestationen Q3 und Q4 gezeigt, die für die Kommunikation mit der in Fig. 3f gezeigten Antwortstation R6 vorgesehen sind. Jede Antwortstation R ist im wesentlichen mit einer Verzögerungsleitung bzw. einem Oberflächenwellen-Bauteil OFW versehen, das mindestens eine Reflexionsstelle aufweist. Die Beschaltung des Bauteils OFW ist dabei im Kommentar zu Fig. 4e für alle Antwortstationen R näher erläutert. Die Abfrage- oder die Antwortstation Q bzw. R ist jeweils in einem Fahrzeug vorgesehen, das sich mit einer Geschwindigkeit von bis zu einigen hundert kmlh an einer Kontroll- oder Informationsstelle vorbei bewegt, in der die zweite Antwortstation R bzw. Q untergebracht ist. Die mit dem Oberflächenwellen-Bauteil OFW versehene Antwortstation R ist dabei immer in der zu identifizierenden Einheit vorgesehen. D.h., falls eine fixe Kontrollstelle vorbeifahrende Objekte identifizieren soll, so sind die Bauteile OFW in diesen Objekten vorgesehen. Falls ein vorbeifahrendes Objekt, z.B. ein Hochgeschwindigkeitszug, jedoch feststellen soll, welche fixe Kontrollstelle passiert wird, so wird das Bauteil OFW in dieser Kontrollstelle vorgesehen. Vorzugsweise können Bauteile OFW auch in beiden Stationen Q und R vorgesehen werden, wodurch z.B. eine gegenseitige Identifikation ermöglicht wird. Die Zeit, die zur Kommunikation zwischen den Stationen Q und R zur Verfügung steht, ist bei hohen Geschwindigkeiten im Bereich von einigen Millisekunden. Man war bisher der Ansicht, dass diese Zeit lediglich zur Identifikation der Antwortstation R ausreichen würde. Ein weiterer Informationsaustausch fand daher nicht statt oder erfolgte über andere Kommunikationsmittel. Das nachfolgend beschriebene erfindungsgemässe Verfahren erlaubt jedoch die Übertragung von zusätzlichen Daten zwischen den beiden Stationen Q und R.

Zur erfindungsgemässen Datenübertragung werden die zur Antwortstation R gesandten trägerfrequenten Signale bzw. die Abfragepulse in Abhängigkeit von zu übertragenden Daten moduliert. Signale die zur Antwortstation R gesandt werden, werden phasen- oder frequenzmoduliert (frequenzumgetastet oder expandiert); Signale hingegen, die zurück zur Abfragestation Q reflektiert werden, werden phasen- oder amplitudenmoduliert.

In der in Fig. 1 dargestellten Abfragestation Q1 ist ein Oszillator MCL vorgesehen, der einerseits mit einem Enkoder ENC und andererseits über einen FSK-Modulator FSK-M, einen Pulsmodulator IPM und einen Zirkulator C mit einer Antenne A verbunden ist. Der Zirkulator C ist ferner über einen Detektor DET mit einem Dekoder DEC verbunden. Der Ausgang des Modulators FSK-M ist ferner mit den Referenzfrequenzeingängen des Dekoders DEC und des Detektors DET verbunden. Der Enkoder ENC ist mit Steuereingängen des Modulators FSK-M und des Pulsmodulators IPM verbunden.

Die gezeigte Schaltung funktioniert folgendermassen:

Der Oszillator MCL führt dem durch den Encoder ENC gesteuerten Modulator FSK-M ein kontinuierliches Hochfrequenzsignal zu, das in Abhängigkeit der an die Antwortstation R zu übertragenden Daten vd-t durch den Modulator FSK-M zwischen zwei Frequenzen umgetastet und an den Pulsmodulator IPM abgegeben wird. Das modulierte Hochfrequenzsignal wird durch den ebenfalls vom Enkoder ENC gesteuerten Pulsmodulator IPM in kurze Pulse umgeformt, die über den Zirkulator C an die Antenne A abgegeben und der Antwortstation R zugeführt werden. Eine von der Antwortstation R reflektierte Sequenz von Antwortpulsen, denen feste oder veränderliche Daten fd, vd-b aufgeprägt sind, wird von der Antenne A zurück über den Zirkulator C zum Detektor DET und weiter zum Dekoder DEC übertragen. Da die Abfragepulse (und daher auch die korrespondierenden Antwortpulse) zwischen z.B. zwei Frequenzen frequenzumgetastet sind, wird das Ausgangssignal des Modulators FSK-M im Detektor DET als Referenz verwendet. Vorzugsweise können z.B. auch mindestens zwei Referenzoszillatoren (oder mindestens zwei von einem Oszillator abgeleitete Signale) verwendet werden. Durch einen vom Enkoder gesteuerten Umschalter würde dabei jeweils der Ausgang eines Oszillators mit den Eingängen des Pulsmodulators IPM, des Detektors DET und des Dekoders DEC verbunden. Der Dekoder DEC ermittelt aus dem vom Detektor DET abgegebenen Signalen die übertragenen Daten fd, vd-b. Die Bandbreite des in der Abfragestation Q enthaltenen Empfängers muss daher genügend gross sein, um zumindest die Frequenzen f1 und f2 einschliessen.

Die in Fig. 1 dargestellte Abfragestation Q1 lässt sich mit Antwortstationen R kombinieren, die in der Lage sind FSK-modulierte Signale zu empfangen und amplituden- oder phasenmoduliert zu reflektieren (falls eine bidirektionale Datenübertragung gefordert ist). Zu diesem Zweck sind die in Fig. 3a, 3c, 3d und 3e gezeigten Antwortstationen R1, R3, R4 und R5 geeignet. Durch die Antwortstationen R1 und R5 werden dabei phasen- und durch die Antwortstationen R3 und R4 amplitudenmodulierte Antwortsignale abgegeben.

Die in Fig. 3a gezeigte Antwortstation R1 ist zum Empfang FSK-modulierter und zur Abgabe phasenmodulierter Signale geeignet. Die in Fig. 3c und 3d gezeigten Antwortstation R3, R4 sind zum Empfang FSK-modulierter und zur Abgabe amplitudenmodulierter Signale geeignet.

Die in Fig. 3a gezeigte Antwortstation R1 weist ein mit einer Antenne ANT versehenes Oberflächenwellen-Bauteil OFW1 auf, das aus einem vorzugsweise piezoelektrischen Substrat besteht, auf dessen Oberfläche sich Oberflächenwellen ausbreiten können. Auf diesem Substrat sind ein Phasenmodulator PM, ein Interdigitalwandler IDW, mehrere Reflektoren RFT, zwei Bandpassfilter BP1, BP2 und ein Dämpfungsmaterial ABS vorgesehen. Die Antenne ANT ist dabei über den Phasenmodulator PM mit dem Interdigitalwandler IDW verbunden, der die über die Antenne ANT empfangenen Signale in Oberflächenwellen umwandelt, die sich gegen die Reflektoren RFT hin ausbreiten. Jeweils beim Erreichen eines Reflektors RFT wird ein Teil der sich ausbreitenden Oberflächenwellen zurück zum Interdigitalwandler IDW reflektiert, umgewandelt und über die Antenne ANT abgestrahlt. Nachdem die Oberflächenwellen die Reflektoren RFT passiert haben, gelangen sie zu den Bandpässen BP1 und BP2 und werden anschliessend im Dämpfungsmaterial ABS absorbiert. Durch die Absorption der Oberflächenwellen werden unerwünschte Reflexionen vermieden.

### Die Antwortstation R1 funktioniert dabei wie folgt:

Die Abfragestation Q1 überträgt trägerfrequente Pulse (engl. : bursts) an die Antwortstation R1, die in Abhängigkeit der zu übertragenden Daten zwischen zwei Frequenzen f1 und f2 umgetastet sind. Die durch den Interdigitalwandler IDW erzeugten Oberflächenwellen, die ebenfalls die Frequenz f1 bzw. f2 aufweisen, werden durch das entsprechende Bandpassfilter BP1 bzw. BP2 in ein elektrisches Signal umgewandelt, das einer logisch "1" bzw. "0" entspricht. Durch die Gleichrichtung der von den Bandpassfiltem BP abgegebenen Signale können die übertragenen Daten daher detektiert werden. Als Antwort auf den empfangenen Puls wird von den Reflektoren RFT ein aus mehreren Pulsen bestehendes Codewort zum Interdigitalwandler IDW reflektiert und über die Antenne ANT abgestrahlt. Die Abfragestation Q1, die dieses Codewort empfängt, ist aufgrund der zeitlichen Abstände zwischen den Pulsen des Codewortes daher in der Lage, die Antwortstation R zu identifizieren. Zur Übertragung von Daten von der Antwortstation R zur Abfragestation Q werden die reflektierten Signale im Phasenmodulator PM in Abhängigkeit der zu übertragenden binären Daten z.B. zwischen mindestens zwei Phasenlagen (z.B. +/- 45° oder +/- 90°) umgetastet. (Phasen - und Frequenz - Modulatoren bzw. Demodulatoren werden z.B. in Herter/Röcker, Nachrichtentechnik - Übertragung und Verarbeitung, München 1976, Seiten 181 - 218 beschrieben. Als Phasenmodulator PM kann z.B. der auf Seite 202, Bild 2.4-27 gezeigte Ringmodulator verwendet werden. Weitere Phasen- und Frequenzmodulationsverfahren sind ferner in R. Mäusl, Digitale Modulationsverfahren, Heidelberg 1991, Kapitel 3 beschrieben.) Wie bereits eingangs erläutert, wird durch das Oberflächenwellen - Bauteil OFW als Antwort auf den Abfragepuls eine Sequenz von mehreren Pulsen reflektiert. Die maximale Datenübertragungsrate wird daher erzielt, indem jeder einzelne Puls der reflektierten Pulssequenz entsprechend einem zu übertragenden Datenbit moduliert wird. Für die Demodulation dieser phasenmodulierten Signale ist in der Abfragestation Q ein Referenzsignal vorzusehen, das jeweils für die Modulation des Abfragesignals und die Demodulation des Antwortsignals verwendet wird. Möglich ist ferner die Verwendung eines Pulses aus der Sequenz der Antwortpulse als Referenzsignal. Z.B. wird die Phasenlage des ersten Pulses der Sequenz nicht verändert. Die Phasenlage der nachfolgenden Pulse der Sequenz kann daher jeweils mit bezug auf den ersten Puls der Sequenz detektiert werden.

Die in Fig. 3c gezeigte Antwortstation R3, die ein programmierbares Oberflächenwellen-Bauteil P-OFW1 aufweist, ermöglicht eine Amplitudenmodulation der reflektierten Signale. Die auf dem Bauteil P-OFW1 vorgesehenen n Reflektoren RFT können dabei mittels Schaltern SW1, ..., SWn derart kurzgeschlossen werden, dass sie die Oberflächenwellen wahlweise reflektieren bzw. nicht reflektieren. Dadurch kann einerseits ein festgelegtes Codewort oder ein n-Bit Datenwort übertragen werden. Selbstverständlich kann auch abwechslungsweise zwischen zwei n-Bit Datenwörtern jeweils ein Codewort übertragen werden. Falls nebst variablen Daten zur Sicherheit jeweils das Codewort mit übertragen werden soll, kann dieses für ein Datenbit = "1" nicht-invertiert und für ein Datenbit = "0" invertiert übertragen werden. Für ein Codewort sind dabei dessen invertierte und nicht-invertierte Form zu reservieren. Die einzelnen Reflektoren RFT weisen wie der gezeigte Interdigitalwandler IDW zwei Kämme mit mehreren Fingern auf. Durch die Wahl der Fingerbreite und der Abstände zwischen den Fingern von je einem Achtel der Wellenlänge vorzugsweise der Mittenfrequenz der übertragenen Signale wird die mechanische Reflexion von Oberflächenwellen verhindert. Mechanische und elektrische Reflexionen können auch durch eine günstige Wahl der Fingerlängen verhindert werden. Eine gute Reduktion der mechanischen Reflexionen wird z.B. erzielt, wenn der erste Finger im Verhältnis zum nächstfolgenden Finger halblang gewählt ist. Die elektrische Reflexion der Wellen bleibt durch die oben beschriebene Wahl der Finger und Fingerabstände weitgehend unbeeinflusst. Die Reflexion elektrischer Wellen, die sich auf dem piezoelektrischen Substrat ausbreiten, kann jedoch durch das Kurzschliessen der beiden mit den Fingern verbundenen Sammelschienen beeinflusst werden. D.h. in Abhängigkeit der zu übertragenden Daten werden die einzelnen Reflektoren RFT kurzgeschlossen. Dazu kann entweder für jeden Reflektor RFT eine separate Kurzschlussschlaufe vorgesehen sein oder es können alle Reflektoren RFT einseitig fest und anderseitig über die Schalter SW1, ..., SWn mit einem gemeinsamen Potential, vorzugsweise mit Nullpotential verbunden bzw. verbindbar sein. Die Schalter SW sind zu diesem Zweck mit einer entsprechenden Steuereinheit verbunden, die z.B. einen Speicherbaustein enthält, in dem das Codewort permanent abgespeichert ist. Möglich ist ferner, nur einen Teil der Reflektoren RFT mit Schaltern SW zu versehen. Weitere Reflektoren RFT können zusätzlich entsprechend einem zu übertragenden Codewort angeordnet sein. Übertragen wird in diesem Fall eine Kombination von festen und variablen Daten. Die Reflektoren RFT können ferner nicht nur ein-, sondern auch beidseitig des Interdigitalwandlers IDW auf dem Oberflächenwellen-Bauteil OFW angeordnet sein.

In Fig. 3c ist ferner eine andere mögliche Anordnung der Bandpassfilter BP1 und BP2 gezeigt. Da sich die Oberflächenwellen auf beiden Seiten des Interdigitalwandlers IDW ausbreiten ist je ein Bandpassfilter BP1 bzw. BP2 auf der linken und der rechten Seite des Interdigitalwandlers IDW angeordnet. Jedes Bandpassfilter wirkt dabei wie ein Interdigitalwandler, dessen Synchronfrequenz einer der (umgetasteten) Frequenzen f1 oder f2 entspricht. Die beiden Bandpassfilter können z.B. auch hinter den Reflektoren RFT angeordnet sein.

Die in Fig. 3d gezeigte Antwortstation R4, weist ein weiteres programmierbares Oberflächenwellen-Bauteil P-OFW2 auf, dessen Reflektoren RFT über vorzugsweise steuerbare Impedanzen IMP abgeschlossen oder abschliessbar sind. Die Impedanzen IMP sind beliebige komplexe Widerstände, durch deren Variation das Reflexionsverhalten der Reflektoren RFT in Zeit und Amplitude verändert werden kann. Bei Amplitudenmodulation geschieht dies vorzugsweise dergestalt, dass ein Minimum bzw. Maximum der Reflexion erreicht wird. Die dazu notwendige Abschlussimpedanz wird entsprechend dem vorgesehenen Reflektorentwurf gewählt.

Zur Erzielung von maximalen Reflexionswerten werden die Reflektoren RFT z.B. mit derart gewählten induktiven Widerständen IMP verbunden, dass die Eigenkapazität der Reflektoren RFT durch eine in Abhängigkeit der Betriebsfrequenz gewählte Induktivität kompensiert wird (j * 2πf * C - j / 2πf * L = 0). Zur Erzielung von minimalen Reflexionswerten werden die Reflektoren RFT vorzugsweise mit kapazitiven Widerständen IMP oder mit Kurzschlüssen verbunden. Zur Erzielung von Reflexionswerten zwischen diesen Eckwerten werden die Reflektoren RFT mit induktiven, kapazitiven und/oder reellen Widerständen IMP verbunden. Als Impedanzen können z.B. Kapazitätsdioden oder elektronische Impedanzen verwendet werden. Ferner kann z.B. ein Parallelkreis vorgesehen werden, bei dem die Induktivität und / oder Kapazität durch einen Feldeffekttransistor zu- oder abschaltbar ist. Die Impedanzen IMP sind über Steuerleitungen mit dem Ausgang einer Steuereinheit IMPC verbunden, durch die für jeden Reflektor RFT das Reflexionsverhalten festlegbar ist. Z.B. wird es dadurch möglich, festzulegen, dass die ersten beiden Reflektoren RFT 50% und die letzten drei Reflektoren RFT 90% der maximal möglichen Energie reflektieren. Dadurch ergeben sich natürlich zusätzliche Freiheitsgrade bei der Festlegung möglicher Kodewörter. Der Modulationsgrad lässt sich daher auch bei der Amplitudenmodulation beliebig ändern. Die Beschaltung der Interdigitalwandler erfolgt analog.

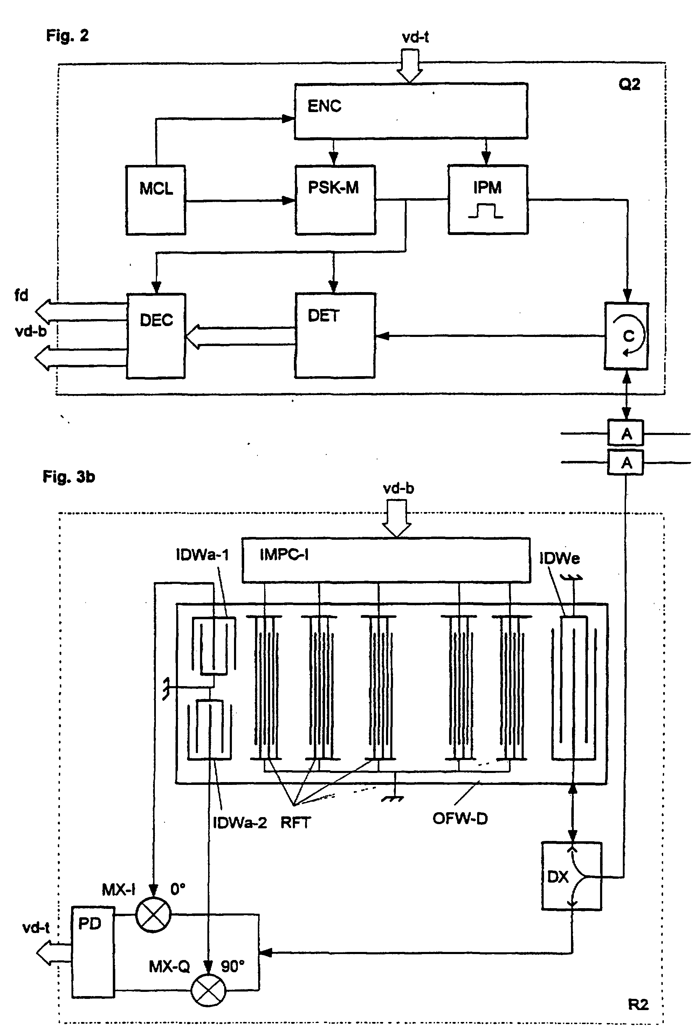

In Fig. 2 ist eine weitere Abfragestation Q2 gezeigt, die zur Abgabe phasenmodulierter Pulse vorgesehen ist. Anstatt des in der Abfragestation Q1 verwendeten FSK-Modulators FSK-M ist in dieser Abfragestation Q2 ein Phasenmodulator PSK-M vorgesehen, welcher die Phase der ausgesendeten Pulse schrittweise von Puls zu Puls in Abhängigkeit der zu übertragenden Daten ändert. Diese sogenannte Phasendifferenzcodierung wird in Herter/Röcker, Nachrichtentechnik, 1. Auflage, München 1976 auf Seite 209 näher beschrieben ist. Die Phasendifferenzcodierung erlaubt eine Demodulation ohne Trägerableitung, da die Nachricht in dem Phasenunterschied von zwei aufeinander folgenden Schritten enthalten ist. Es genügt daher in der Demodulationsstufe jeden ankommenden Puls mit dem vorhergehenden zu vergleichen. Zur Erhöhung der Übertragungsrate werden vorzugsweise mehrere unterschiedliche Phasenschritte vorgesehen (z.B. 0°, 45°, 90°, 135°). In der zugehörigen in Fig. 3b gezeigten Antwortstation R2 werden die Abfragepulse von einem sogenannten Diplexer DX einerseits über ein Oberflächenwellen-Bauteil OFW-D und andererseits direkt je einer Mischstufe MX-I und einer Mischstufe MX-Q zugeführt, deren Ausgänge je mit einem Eingang eines Phasendetektors PD verbunden ist. Auf dem Oberflächenwellen-Bauteil OFW-D ist ein mit dem Diplexer DX verbundener Eingangs-Interdigitalwandler IDWe und ein erster mit der Mischstufe MX-I sowie ein zweiter mit der Mischstufe MX-Q verbundener Ausgangs-lnterdigitalwandler IDWa-1 bzw. IDWa-2 vorgesehen. Die Ausgangs-Interdigitalwandler IDWa-1 und IDWa-2 sind auf dem Substrat um ein Viertel der Wellenlänge der Oberflächenwellen gegeneinander verschoben, so dass den Mischstufen MX-I, MX-Q zwei um 90° gegeneinander phasenverschobene Signale zugeführt werden, die je mit dem direkt vom Diplexer DX an die Mischstufen MX-I, MX-Q abgegebenen Signal gemischt werden. Die vom Eingangs-Interdigitalwandler IDWe gebildeten Oberflächenwellen gelangen daher zu Reflektoren RFT, die z.B. zwischen den Interdigitalwandlern IDWe, IDWa vorgesehen sind und werden dort zurück zum Diplexer DX und weiter zur Abfragestation Q2 reflektiert. Ferner gelangen die Oberflächenwellen nach einer bestimmten Laufzeit zu den Ausgangs-Interdigitalwandlem IDWa-1, IDWa-2. Der Abstand der Interdigitalwandler IDWe, IDWa und die Repetitionsfrequenz der Abfragepulse wird dabei derart gewählt, dass die Laufzeit der Oberflächenwellen der Periodendauer der Pulsrepetitionsfrequenz entspricht. Zu dem Zeitpunkt, zu dem das durch das Oberflächenwellen-Bauteil OFW-D verzögerte Abfragesignal bei den Mischstufen eintrifft, steht daher jeweils der nächste Puls, der vom Diplexer DX direkt zu den Mischstufen MX-I, MX-Q geführt wird, für die Demodulation zur Verfügung. Die Demodulation geschieht dabei, wie oben erwähnt, durch einen Phasenvergleich der beiden Signale. Auf die lokale Erzeugung eines Referenzsignals für die Demodulation kann daher verzichtet werden. Zur Übertragung von Daten zur Abfragestation Q2 ist in der Antwortstation R2 die oben beschriebene Beschaltung der Reflektoren RFT mit komplexen Widerständen vorgesehen. Zu diesem Zweck ist eine Steuereinheit IMPC-I vorgesehen, in der die zuschalt- oder änderbaren reellen oder komplexen Widerstände integriert sind.

Zur Datenübertragung zwischen den Stationen Q und R können weitere Modulationsarten vorteilhaft eingesetzt werden. Unter Anwendung der Pulskompressionstechnik werden die Abfragepulse vor der Übertragung z.B. expandiert. Die Expansionsrichtung wird dabei vorzugsweise entsprechend den zu übertragenden Daten gewählt. Zur Erhöhung der Übertragungsrate werden einzelne Bereiche des expandierten Pulses ferner in Abhängigkeit der zu übertragenden Daten markiert. Besonders vorteilhaft bei der Anwendung der Pulskompressionstechnik ist, dass schmalbandige Störsignale, die sich auf dem Übertragungsweg den Abfragepulsen überlagern, durch die in der Antwortstation R, bzw. nach der Reflexion in der Abfragestation Q vorgenommene Pulskompression weitgehend unterdrückt werden. Dieser für das erfindungsgemässe Verfahren wesentliche tritt unabhängig davon ein, ob variable Daten oder nur ein unveränderliches Codewort übertragen wird.

Zur Reduktion der Signalleistung bzw. zur Verbesserung des Verhältnisses von Signal zu Rauschen wird der Abfragepuls in der Sendestufe der Abfragestation Q expandiert und an die Antwortstation R übertragen. Das von der Antwortstation R retournierte Codewort besteht daher aus einer Folge von expandierten Signalen, die in der Empfangsstufe der Abfragestation Q wieder komprimiert werden. Die Sendeenergie wird dadurch um den Faktor i vergrössert, um den der Abfragepuls verlängert wurde. Bei unveränderter Sendeenergie kann die maximale Sendeleistung daher um den Faktor i gesenkt werden, wodurch eine Beeinflussung von Drittgeräten weitgehend vermieden wird. Zur Expansion und Kompression von Pulsen sind OPW-Bauteile (dispersive SAW-Filter) oder auch digitale Schaltungen geeignet. Beim expandierten Puls wird dessen Trägerfrequenz zwischen zwei Werten f_{L} und f_{H} geändert. Zur Übertragung von Daten von der Abfragestation Q zur Antwortstation R wird die Frequenz z.B. für Datenbits = "1" vom Wert f_{L} (bei aufsteigender Pulsflanke) gegen den Wert f_{H} (bei abfallender Pulsflanke) und für Datenbits = "0" vom Wert f_{H} gegen den Wert f_{L} geändert. Zur einfachen Detektion der übertragenen Daten in der in Fig. 3f gezeigten Antwortstation R6 wird der darin verwendete Interdigitalwandler D-IDW als dispersive Verzögerungsleitung ausgebildet, die aus vielen Fingerpaaren (bekannt ist die Verwendung von bis zu einigen 10³-Fingerpaaren) besteht. Durch die Wahl des Abstandes zwischen den Fingerpaaren, der sich von Fingerpaar zu Fingerpaar stetig ändert, wird die "eingeprägte" Synchronfrequenz im Interdigitalwandler D-IDW derart variiert, dass auf einer Seite des Interdigitalwandlers D-IDW z.B. die niedrigen Wellenlängen eine hohe und die hohen Wellenlängen eine niedrige Laufzeit erhalten. Auf der anderen Seite des Interdigitalwandlers D-IDW erhält man die entgegengesetzte Frequenzmodulation. Als Antwort auf einen angelegten Puls gibt die dispersive Verzögerungsleitung daher ein frequenzmoduliertes Signal bzw. einen expandierten Puls ab, dessen Dauer der Dispersionszeit der Verzögerungsleitung entspricht. Als Antwort auf ein frequenzmoduliertes Signal bzw. einen expandierten Puls wird von der Verzögerungsleitung entweder ein gedehntes oder ein komprimiertes Signal abgegeben. Bezogen auf den in Fig. 3f dargestellten und beidseitig von je einem Sensor S1 bzw. S2 flankierten dispersiven Interdigitalwandler D-IDW bedeutet dies, dass ein angelegter expandierter Puls, der sich vom Interdigitalwandler D-IDW in beide Richtungen ausbreitet, von einem Sensor S1; S2 als noch stärker expandierter Puls von geringer Signalstärke und vom anderen Sensor S2; S1 als komprimierter Puls von hoher Signalstärke empfangen wird. In Abhängigkeit des Frequenzverlaufs des expandierten Pulses wird daher entweder vom Sensor S1 oder vom Sensor S2 ein Signal empfangen, das eine Signalstärke aufweist, aufgrund der festgestellt werden kann, wie der expandierte Puls moduliert wurde bzw. ob ein Bit = "1" oder ein Bit = "0" (up-chirp bzw. down-chirp) übertragen wurde. Durchaus möglich ist ferner die Verwendung eines nicht dispersiven Interdigitalwandlers. Zur Detektion der übertragenen Daten sind in diesem Fall Sensoren vorzusehen, die zur Feststellung der Expansionsrichtung der empfangenen Pulse geeignet sind. Die Sensoren S1, S2 können zu diesem Zweck z.B. als dispersive Interdigitalwandler ausgestaltet sein. Falls die expandierten Pulse nach den eingangs beschriebenen FSK- oder PSK Verfahren moduliert sind, können die Sensoren S1, S2, wie in den Figuren 3a, 3c und 3d dargestellt, aus entsprechend abgestimmten Bandpassfiltern bestehen.

Zur Übertragung grösserer Datenmengen wird der expandierte Puls in n Bereiche B1, ..., Bn unterteilt, von denen mindestens einer durch das Einfügen einer Pulslücke oder eines Signalanteils unterschiedlicher Phasenlage markiert wird. Falls z.B. 16 Bereiche B1, ..., B16 vorgesehen sind und nur jeweils ein Bereich markiert wird, so kann mit jedem Puls der Informationsgehalt eines 4-Bit Datenwortes übertragen werden. Der Empfänger muss daher feststellen, in welchem Bereich eine Markierung vorgesehen ist. Insbesondere beim Auftreten von starken Pulsverformungen kann dies zu Schwierigkeiten führen, da in diesem Fall nicht mehr genau festgestellt werden kann, wo der erste Bereich B1 beginnt. Der Empfänger wird daher eine detektierte Marke möglicherweise einem falschen Bereich zuordnen. Z.B. wird die Marke, die sich tatsächlich im Bereich B10 befindet einem benachbarten Bereich B9 oder B11 zugeordnet. Dieses Problem wird gelöst, indem jeweils der Zeitpunkt des Auftretens des komprimierten Pulses als zeitliche Referenz gewählt wird. Durch die Messung der zeitlichen Verschiebung der detektierten Marken in Bezug auf den komprimierten Puls können die Marken den richtigen Bereichen B1, ..., B16 leicht zugeordnet werden. Beim Versehen der expandierten Pulse mit Pulslücken ist darauf zu achten, dass die Seitenzipfel nicht unzulässig ansteigen. Vorzugsweise wird daher nur eine einzige Pulslücke oder die Phasenmodulation einzelner Bereiche vorgesehen.

In Fig. 3f ist das Dämpfungsmaterial ABS, das z.B. auf dem in Fig. 3a gezeigten Oberflächenwellen-Bauteil OFW1 beidseits der Reflektoren RFT und Interdigitalwandler IDW vorgesehen ist, durch Wandler-Elemente SPUDT ersetzt, die in der Lage sind, die Oberflächenwellen zu absorbieren und in Form elektrischer Signale an ein Stromversorgungsmodul SPPS abzugeben, in dem durch Gleichrichtung und Glättung eine Gleichspannung erzeugt wird, die z.B. dem Phasenmodulator oder weiteren aktiven Bautellen zugeführt wird. Die Wandler-Elemente SPUDT können dabei Interdigitalwandler oder Einphasen-Unidirektional-Wandler (single phase unidirectional transformer) sein. Vorzugsweise werden dispersive Interdigitalwandler IDW verwendet, die die expandierten Signale in kurze Signale hoher Amplitude umwandeln, welche sich problemlos gleichrichten lassen. Falls ein Wandler SPUDT nahe genug beim Eingangs-Interdigitalwandler IDW vorgesehen ist, kann die im Stromversorgungsmodul SPPS erzeugte Gleichspannung auch sofort zur Aktivierung der in Fig. 3c und 3d vorgesehenen Schalter SW bzw. Impedanzen IMP verwendet werden. Ferner können die Wandler-Elemente vorzugsweise derart auf dem Oberflächenwellen-Bauteil OFW2 vorgesehen sein, dass die elektrische Energie immer dann dem Stromversorgungsmodul SPPS zugeführt wird, wenn z.B. ein Sendeverstärker oder der Modulator aktiviert werden muss. Die in Fig. 3f gezeigte Antwortstation R6 arbeitet somit wie eine aktive, durch eine lokale Stromversorgungseinheit gespeiste Sende- und Empfangsstation. Falls die Entnahme eines grösseren Anteils der Energie des Eingangssignals zulässig und notwendig ist, kann das Stromversorgungsmodul SPPS z.B. über einen Leistungsteiler (s. Fig. 4e, Power Splitter PSP) direkt mit der Antenne ANT verbunden werden. Im Stromversorgungsmodul SPPS kann anhand der zugeführten Abfragepulse ferner ein Taktsignal (s. Fig. 4e, Signal en) gebildet werden, das zur Aktivierung der in der Antwortstation R vorgesehenen Modulationsstufe bzw. zur Übergabe von Daten an die zur Beschaltung der Reflektoren RFT verwendete Steuereinheit IMPC-I vorgesehen ist.

Fig. 4a zeigt einen prinzipiellen Schaltungsaufbau einer nach der Pulskompressionstechnik arbeitenden Abfragestation Q3, die zur Übertragung von unveränderlichen oder variablen Daten vd-t z.B. an eine Antwortstation R9 sowie zur Detektion und Dekodierung von jeweils unveränderlichen Daten (z.B. ein fest zugeordnetes Codewort) oder veränderlichen Daten geeignet ist, die von der Antwortstation R9 an die Abfragestation Q3 übertragen werden. Dabei ist ein Oszillator MCL einerseits mit einem Detektor DD/SP und einem Dekoder DEC und andererseits über einen Pulsmodulator IPM, ein Dispersionsnetzwerk DN, einen Pulsbereichsmodulator BM und einen Zirkulator C mit der Antenne A verbunden. Der Zirkulator C ist ferner über ein Kompressionsnetzwerk KN mit dem Detektor DD/SP verbunden, der seinerseits mit dem Dekoder DEC verbunden ist. Ferner ist ein mit dem Oszillator MCL, dem Pulsmodulator IPM, dem Dispersionsnetzwerk DN und dem Pulsbereichsmodulator BM verbundener Enkoder ENC vorgesehen. Der Pulsbereichsmodulator BM ist jedoch nur vorgesehen, falls die Bereiche B1, ..., Bn des expandierten Pulses, wie oben erläutert, markiert werden sollen.

Die gezeigte Schaltung funktioniert folgendermassen :

Der Oszillator MCL führt dem Pulsmodulator IPM ein kontinuierliches Hochfrequenzsignal zu, das durch den vom Enkoder ENC gesteuerten Pulsmodulator IPM in kurze Pulse umgeformt wird, die dem Dispersionsnetzwerk DN zugeführt und in diesem expandiert werden. Im Dispersionsnetzwerk DN wird der Puls daher durch Frequenzmodulation in ein sogenanntes Chirpsignal verwandelt, dessen Frequenz in Abhängigkeit der zu übertragenden Daten entweder von einer Frequenz f1 zu einer Frequenz f2 ansteigt oder von der Frequenz f2 zur Frequenz f1 abfällt. Am einfachsten lässt sich diese unterschiedliche Modulation durch die Verwendung von zwei parallelen dispersiven Verzögerungsleitungen erzielen, die einander entgegengesetzt moduliert sind. Durch einen in Abhängigkeit der zu übertragenden Daten gesteuerten Umschalter kann der Puls daher in der ersten oder in der zweiten Verzögerungsleitung expandiert werden. Falls auf den derart expandierten Puls zusätzliche Informationen aufgeprägt werden sollen, wird zusätzlich der Pulsbereichsmodulator BM verwendet, der gesteuert durch den Enkoder ENC den expandierten Puls in den dafür vorgesehenen Bereichen amplituden- oder phasenmoduliert und über den Zirkulator C an die Antenne A weiterleitet. Der Zirkulator C, dessen Eigenschaften dem Fachmann bekannt sind, leitet die Signale vom Pulsbereichsmodulator BM nur zur Antenne A und die Signale von der Antenne A nur zum Kompressionsnetzwerk KN. Anstelle des Zirkulators C kann beispielsweise auch ein Schalter verwendet werden, der im Sendefall den Pulsbereichsmodulator BM und im Empfangsfall das Kompressionsnetzwerk KN mit der Antenne A verbindet. Als Antwort auf den expandierten Abfragepuls wird von der Antwortstation R9 eine Sequenz von expandierten Pulsen reflektiert, die im Kompressionsnetzwerk KN wieder in Pulse verwandelt werden, die demjenigen entsprechen, der dem Dispersionsnetzwerk DN zugeführt wurde. Die Pulskompression erfolgt dabei im Kompressionsnetzwerk KN derart präzis, dass alle Frequenz- und Phasenänderungen, die dem Puls im Dispersionsnetzwerk DN aufgezwungen wurden, gänzlich kompensiert werden. Vorzugsweise sind auch im Kompressionsnetzwerk KN zwei dispersive bzw. kompressive Verzögerungsleitungen vorgesehen, die in Abhängigkeit der Expansionsrichtung des expandierten Pulses umgeschaltet werden. Die Umschaltung der im Dispersionsnetzwerk DN und im Kompressionsnetzwerk KN vorgesehenen Verzögerungs- bzw. Kompressionsleitungen erfolgt vorzugsweise synchron. Der Detektor DD/SP, der vorzugsweise mit einem Signalprozessor versehen ist, stellt ferner fest, in welchen Abständen die Pulse der von der Antwortstation R9 übertragenen Pulssequenz eintreffen und übergibt eine entsprechende Folge von Datenbits an den Dekoder DEC, der die eintreffenden Daten dekodiert. Zusätzlich kann in der Abfragestation Q3 ein FSK-Modulator vorgesehen sein, der die Trägerfrequenz zwischen zwei oder mehreren Werten umtastet. (Die im Zusammenhang mit der Abfragestation Q1 und den Antwortstationen R1, R3 und R4 beschriebene Modulations- und Demodulationsarten (FSK-, PSK-, Phasen- und Amplitudenmodulation) können in der Abfragestation Q3 und der Antwortstationen R9 analog angewendet werden.)

Ferner wird vor dem Pulsmodulator IPM vorzugsweise eine Modulationsstufe eingefügt, durch die vorzugsweise eine Einseitenbandmodulation der dem Pulsmodulator IPM zugeführten Signale vollzogen wird. Selbstverständlich ist in diesem Fall in den Empfangsstufen in der Abfragestation Q3 und in der Antwortstation R9 eine entsprechende Demodulationsstufe vorzusehen. Die Wahl einer im Verhältnis zur Trägerfrequenz kleinen Modulationsfrequenz von z.B. einigen Kilohertz ergibt einen günstigen Rauschabstand, der insbesondere durch die dadurch ermöglichte Verwendung von schmalbandigen Filtern erreicht wird.

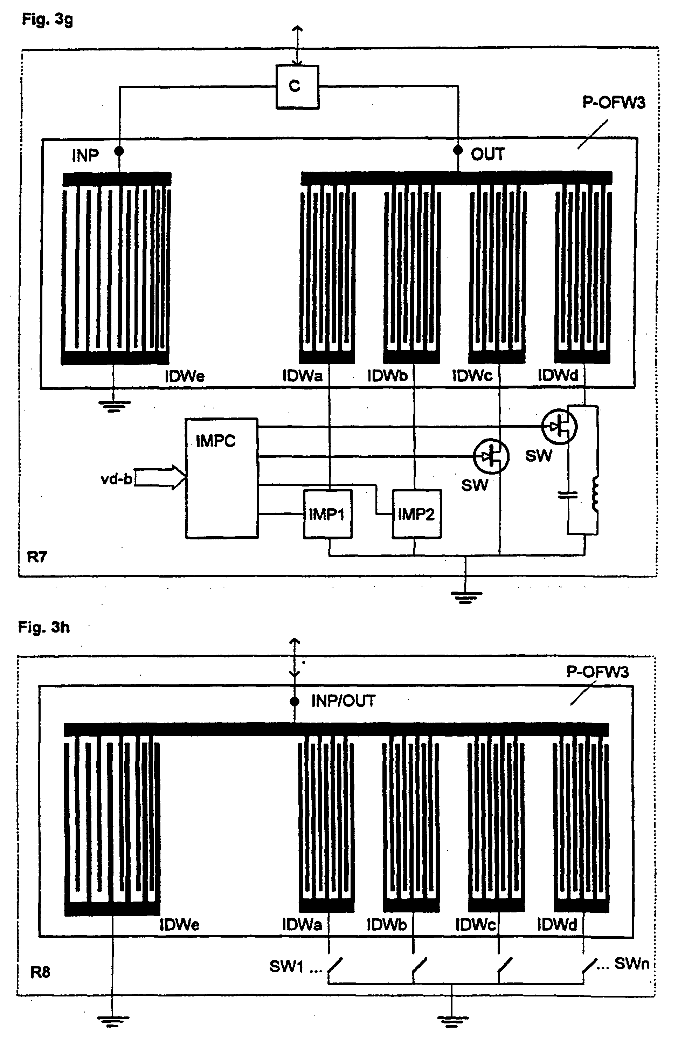

In Fig. 4e ist die Antwortstation R9 im Detail dargestellt, deren Beschaltung der Oberflächenwellen-Bauteile OFW bzw. P-OFW vorzugsweise auch in den in Fig. 3 dargestellten Antwortstationen anwendbar ist. Die Antwortstation R9 ist zur Demodulation der modulierten Abfragepulse, zur Detektion der übertragenen Daten sowie zur Übertragung von variablen Daten an die Abfragestation Q3 geeignet. Die Antenne ANT ist über einen Teiler PSP (engl. : Power Splitter) einerseits mit einem oder mehreren Oberflächenwellen-Bauteilen OFW bzw. P-OFW und andererseits über einen Detektor DD mit einer Schnittstelle I/O verbunden. Die Schnittstelle I/O, die über Datenbusse Daten vd-t, vd-b mit weiteren Einheiten austauscht, ist ferner mit dem Netzteil PS und über einen Datenpuffer BFF und ein Register REG mit dem Bauteil P-OFW verbunden. Zur Abgabe von Aktivierungssignalen en ist der Detektor DD ferner über eine Leitung direkt mit dem Register REG verbunden. Wesentliche Teile des Detektors DD können dabei bereits auf dem Bauteil OFW realisiert sein.

Die Schaltungsanordnung funktioniert wie folgt:

Ein von der Abfragestation Q3 empfangener Abfragepuls wird über die Antenne ANT und den Teiler PSP an das Bauteil OFW und den Detektor DD abgegeben. Im Bauteil OFW wird der Puls durch den Interdigitalwandler IDW in Oberflächenwellen umgewandelt, die von den aktiven Reflektoren RFT zurück zur Antenne ANT reflektiert werden. Zur Detektion der Expansionsrichtung der Abfragepulse bzw. der entsprechenden Daten wird in der Antwortstation R9 ein vorzugsweise als Interdigitalwandler D-IDW (siehe Fig. 3f) verwendetes Dispersionsnetzwerk mit zumindest einem angrenzenden Sensor S vorgesehen. In Abhängigkeit der Expansionsrichtung der expandierten Abfragepulse wird durch dieses Dispersionsnetzwerk daher ein komprimierter Puls von hoher Signalstärke oder ein noch weiter expandierter Puls von geringer Signalstärke an den Sensor S abgegeben. Der Detektor DD detektiert daher, z.B. über einen weiteren Sensor jeweils den eintreffenden Puls und erhält vom Sensor S die Information bezüglich der Expansionsrichtung (f1 --> f2 = "0" oder f2 --> f1 = "1") dieses Pulses. Mit dem in Fig. 3e gezeigten Bauteil OFW wird dem Detektor DD von einem der beiden Sensoren S1, S2 jeweils ein komprimierter Puls zugeführt, der dem übertragenen Datenbit "0" bzw. "1" unmittelbar entspricht.

Wie eingangs erläutert, wird dem Detektor DD vorzugsweise nicht nur der expandierte, sondern auch der entsprechende komprimierte Puls zugeführt. Das Eintreffen des komprimierten Pulses wird dem Detektor DD z.B. jeweils von einem der beiden in Fig. 3f gezeigten Sensoren S1, S2 gemeldet. Der mit Phasen- oder Amplitudendetektoren versehene Detektor DD stellt danach fest, mit welcher zeitlichen Verschiebung zu diesem komprimierten Puls die in der Abfragestation Q3 durch den Pulsbereichsmodulator BM in die expandierten Pulse eingeprägten Phasen- oder Amplitudenänderungen auftreten. Der komprimierte Puls dient daher vorzugsweise auch als Referenz, um festzustellen, welcher der im expandierten Puls vorgesehenen Bereiche B1, ..., Bn markiert wurde. Die detektierten Daten werden nachfolgend dekodiert und an die Schnittstelle I/O abgegeben.

Zur Übertragung von Daten von der Antwortstation R9 zur Abfragestation Q3 können wahlweise zwei verschiedene Verfahren verwendet werden. Einerseits kann zumindest ein Puls der reflektierten Pulssequenz phasenmoduliert werden. Dazu wird der Interdigitalwandler D-IDW über einen vom Register REG gesteuerten Phasenmodulator PM mit der Antenne ANT verbunden. Dem Register wird dabei jeweils vom Detektor DD ein Aktivierungssignal en (enable) zugeführt, nach dessen Eintreffen der Phasenmodulator PM entsprechend den im Register REG abgespeicherten Daten gesteuert wird. Da in der Abfragestation Q nach der Kompression der Antwortpulse alle durch die vorangegangene Expansion verursachten Phasenveränderungen aufgehoben wurden, verbleiben nur noch die Phasenverschiebungen auf dem komprimierten Puls, die in der Antwortstation R vom Phasenmodulator PM aufgeprägt wurden. Diese Phasenverschiebungen lassen sich daher in der Abfragestation Q durch einen Vergleich der Phase der komprimierten Pulse mit einer Referenzphase leicht detektieren.

Daten lassen sich von der Antwortstation R9 zur Abfragestation Q3 ferner durch die Verwendung des unter Fig. 3c oder 3d beschriebenen Amplitudenmodulation übertragen. Das Reflexionsverhalten der Reflektoren RFT wird dazu in Abhängigkeit der im Register REG abgelegten Daten geändert. Dieser Vorgang wird vorzugsweise ebenfalls vom Detektor DD durch das Aktivierungssignal en ausgelöst, nachdem dieser ein Abfragesignal detektiert hat. Vorzugsweise wird das Reflexionsverhalten der Reflektoren RFT jeweils direkt nach der Reflexion des vorhergehenden Abfragepulses entsprechend dem nächstfolgenden Datenwort neu eingestellt. Die im Register REG abgelegten Daten werden jeweils über die Schnittstelle I/O eingelesen und im Datenpuffer BFF zwischengespeichert. Zur Detektion des Antwortpulses in der Abfragestation Q3 wird entweder das Auftreten eines Pulses der Antwortsequenz oder vorzugsweise ein in der Abfragestation Q3 festgelegter Zeitpunkt (z.B. Zeitpunkt der Abgabe des Abfragepulses oder der Zeitpunkt des Erhalts des ersten vorzugsweise festen Antwortpulses) als Referenz zur Detektion der Antwortpulse gewählt. Zur Detektion der übertragenen Daten wird im Detektor DD/SP festgestellt, wie viele Antwortpulse eintreffen und welchen zeitlichen Abstand diese in Bezug zur Referenz aufweisen.

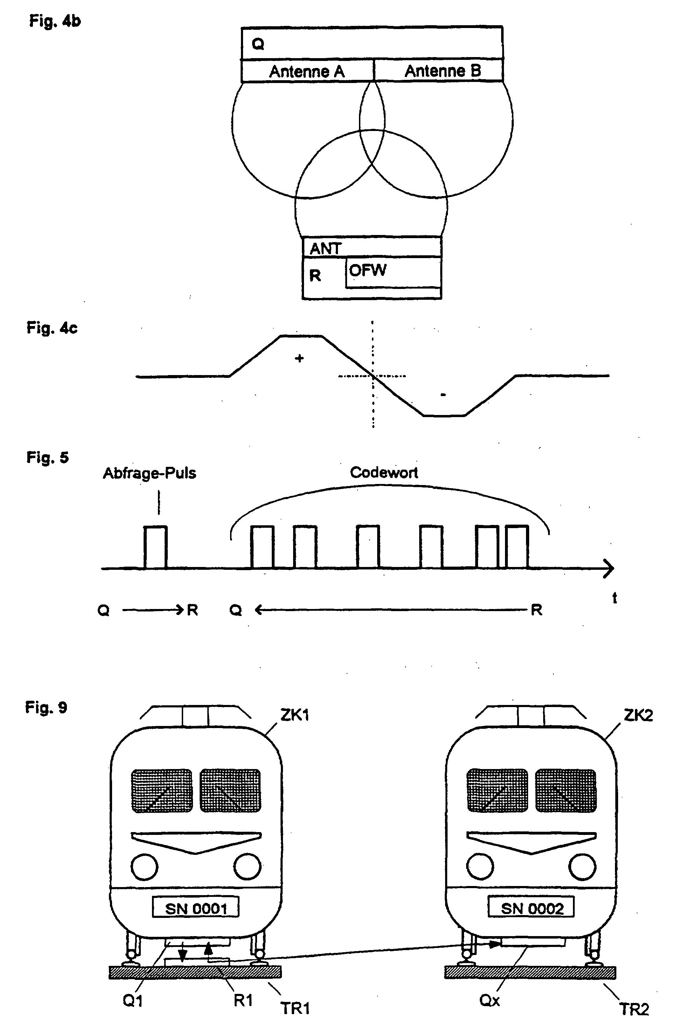

Wie bereits eingangs erläutert, weisen die Stationen Q und R normalerweise eine hohe Relativgeschwindigkeit auf. Für verschiedene Anwendungen ist es von Bedeutung, dass die relative Lage beider Stationen Q und R genau bestimmt werden kann. Z.B. wird die Datenübertragung erst gestartet, nachdem die Stationen Q und R eine bestimmte Lage eingenommen haben, da ein zu früher oder zu später Beginn der Datenübertragung zu Übertragungsfehlern führen könnte. Fig. 4b zeigt eine mit zwei Antennen A, B ausgerüstete Abfragestation Q, die mit einer Antwortstation R in Funkkontakt steht. Die Antennen A, B sind Teil einer Monopulsantenne. D.h. der Abfragepuls wird über beide Antennen A, B gleichzeitig abgesandt und die von der nur eine Antenne ANT aufweisenden Antwortstation R retournierten Antwortpulse werden von beiden Antennen A, B empfangen und an einen Diskriminator weitergeleitet, dessen Kennlinie in Fig. 4c angegeben ist. In Abhängigkeit der relativen Lage der Stationen Q und R wird entweder von der Antenne A oder B ein stärkeres Signal empfangen. Nur wenn die beiden Stationen Q und R genau übereinander liegen, geben beide Antennen A, B Signale von gleicher Stärke ab, die sich in einer im Diskriminator vorgesehenen Differenzstufe gegenseitig aufheben. Beim Durchlaufen des Nulldurchgangs der Diskriminatorkennlinie liegen die Stationen Q und R daher genau übereinander.

Die in Fig. 4d gezeigte Abfragestation Q4 beruht daher auf einer Erweiterung der Abfragestation Q3. Der Zirkulator C ist nun über ein Summen- und Differenznetzwerk S-D-NET mit zwei Antennen A, B verbunden. Das Summen- und Differenznetzwerk S-D-NET verfügt über vier Pforten P1, ..., P4 die mit Ausnahme von Pforte P2 je als Ein- und Ausgänge dienen. Der Zirkulator C ist mit Pforte P1 und die Antennen A, B mit den Pforten P3 und P4 verbunden. Die Signalpfade innerhalb dieses S-D-Netzwerks sind derart festgelegt, dass Signale von der Pforte P1 immer mit identischer Phasenlage zu den Pforten P3 und P4 und Signale von den Pforten P3 und P4 mit identischer bzw. inverser Phasenlage als Summen- bzw. Differenzsignal sum; diff zu den Pforten P1 bzw. P2 gelangen. Diese Summen- bzw. Differenzsignale sum; diff werden über die Pforte P1, den Zirkulator C und ein Kompressionsnetzwerk KN-S bzw. die Pforte P2 und ein Kompressionsnetzwerk KN-D dem Detektor DD/SP zugeführt. Selbstverständlich sind in den einzelnen Modulen noch Vor- und Endverstärker vorgesehen, deren Einsatz dem Fachmann bekannt ist.

Die Schaltungsanordnung funktioniert wie folgt:

Aus dem vom Oszillator MCL zugeführten Signal werden im Pulsmodulator IPM einzelne Pulse erzeugt die im Dispersionsnetzwerk DN expandiert und dem Pulsbereichsmodulator BM zugeführt werden. Der Enkoder ENC steuert die Modulatoren IPM, DN ( Dispersionsnetzwerk) und BM derart, dass entsprechend den am Enkoder ENC anliegenden und an die Antwortstation R9 zu übermittelnden Daten vd-t, ein up-Chirp oder ein down-Chirp (Expandierte Pulse mit entsprechender Expansionsrichtung) erzeugt oder zumindest eine Marke in den Bereichen B1, ..., Bn vorgesehen wird. Der vom Pulsbereichsmodulator BM an den Zirkulator Z abgegebene Abfragepuls wird zur Pforte P1 des Summen- und Differenznetzwerks S-D-NET und über dessen Pforten P3, P4 zu den Antennen A, B geführt und zur Antwortstation R9 übertragen. Die von der Antwortstation R9 den Antennen A, B übermittelten Antwortsignale werden vom Summen- und Differenznetzwerks S-D-NET durch phasenrichtige Überlagerung in ein Summen- und ein Differenzsignal sum, diff umgewandelt und über die Pforte P1 und den Zirkulator C bzw. die Pforte P2 an das Kompressionsnetzwerk KN-S bzw. KN-D abgegeben. In diesen Kompressionsnetzwerken KN werden die empfangenen Signale, die aus Folgen von expandierten Pulsen bestehen, vorverstärkt, komprimiert und an den Detektor DD/SP weitergeleitet. Im Detektor DD/SP wird durch Teilung des Differenzsignals diff durch das Summensignal sum vorzugsweise ein normiertes Signal diff-n = diff/sum gebildet, aufgrund dessen die relative Lage und Bewegungsrichtung der Stationen Q und R festgestellt werden kann. Die Polarität des Signals diff-n gibt an, ob die Abfragestation Q4 links oder rechts der Antwortstation R9 liegt. Dessen Signalstärke entspricht dem relativen Abstand. Aufgrund des Signalverlaufs (Annäherungsrichtung an den Nullpunkt der Diskriminatorkennlinie kann die relative Bewegungsrichtung (Annäherung von der linken oder rechten Seite) ermittelt werden. Aufgrund der Anzahl der dem Signalprozessor zugeführten Pulse und / oder deren Phasenlage können ferner das fixe Codewort und die variablen Daten entnommen werden. Als zeitliche Referenz wird vorzugsweise der in der Abfragestation Q4 bekannte Zeitpunkt des Absendens des Abfragepulses gewählt. Durch den Dekoder DEC werden daher folgende Signale bzw. Daten abgegeben :

| | |
|---|---|
| Relative Bewegungsrichtung | tdir |
| Relativer Abstand | tloc |
| Codewort bzw. feste Daten von der Antwortstation R5 | fd |
| Variable Daten von der Antwortstation R9 | vd-b |

Zur Erhöhung der Datenübertragungsrate kann wiederum vorgesehen werden, dass die Abfragepulse FSK-moduliert werden.

Im Kommentar zu Fig. 3a wurde bereits erläutert, dass für die Übertragung von Daten von der Antwortstation R zur Abfragestation Q Pulse der reflektierten Pulssequenz phasenmoduliert werden können. Falls zur Erhöhung der Übertragungsrate mehrere Pulse moduliert werden sollen, steigen die Anforderungen an die mit dem Phasenmodulator verbundene Steuerschaltung, welche den Modulationsvorgang steuert. D.h., die Steuerschaltung muss jedem reflektierten Puls das zugehörige Datenbit zum richtigen Zeitpunkt zur Verfügung stellen. Bei einer Pulssequenz von drei Pulsen stellt die Steuerschaltung daher das erste Datenbit für den ersten Puls z.B. in einem Register bereit, stellt die Abgabe des ersten Pulses fest und stellt anschliessend das nächste Datenbit für den zweiten Puls im Register bereit. Mit den in Fig. 3e über Phasenmodulatoren PM1, ..., PMn sowie eine Addierstufe ADD mit der Antenne ANT verbundenen Oberflächenwellen - Bauteile OFW1, ..., OFWn lässt sich der Steuerungsaufwand wesentlich vereinfachen. Jedes der Bauteile OFW ist mit einem Interdigitalwandler IDW1;..., IDWn und mindestens einem Reflektor oder einer einem Codewort entsprechenden Reflektoranordnung RFT11, ..., RFTnm verbunden. Im einfachsten Fall ist auf jedem Bauteil OFW nur eine einzige Reflektoranordnung RFT vorgesehen. Diese Reflektoranordnungen RFT1, ..., RFTn sind auf den Bauteilen OFW jedoch derart unterschiedlich positioniert, dass die entsprechenden Pulse jeweils mit einer gegenseitigen zeitlichen Verschiebung reflektiert werden. Die n Bauteile OFW verhalten sich bezüglich der reflektierten Pulssequenz daher gleich wie ein einziges Bauteil OFW, das n Reflektoranordnungen RFT aufweist. Vorteilhaft bei der in Fig. 3e gezeigten Anordnung ist jedoch, dass für jede reflektierte Pulssequenz jedem Phasenmodulator PM nur ein einziges Datenbit zugeführt werden muss. Die Steuerung der Datenübertragung ist daher denkbar einfach. Für jeden Abfragepuls stellt die Steuerung jeweils n Datenbits im Register bereit, die absolut korrekt übertragen werden. Probleme, die durch eine nicht zeitgenaue Abfolge der Steuersignale auftreten könnten, werden dadurch beseitigt. Falls auch bei dieser Anordnung die Datenübertragungsrate erhöht werden soll, werden auf den Bauteilen OFW weitere Reflektoranordnungen RFT12, ..., RFTnm vorgesehen. Die Steuerung der Datenübertragung ist auch in diesem Fall noch immer einfach möglich, da zwischen den Reflektoranordnungen (z.B. zwischen RFT11 und RFT12) immer relativ grosse Abstände vorhanden sind. Bei der gezeigten Anordnung würde z.B. dem Phasenmodulator PM1 von den zu übertragenden Daten vd-b zuerst das Datenbit 1 und nachfolgend das Datenbit n+1 zugeführt. In der Addierstufe ADD sind die Phasenmodulatoren PM seriell oder parallel zusammengeschaltet und mit der Antenne ANT verbunden. Vorzugsweise wird jedoch nur ein einzelnes Oberflächenwellenbauteil verwendet, das n verschiedene Spuren aufweist. Die in Fig. 3e gezeigten Bauteile werden daher nur auf einem einzigen Substrat innerhalb der zugehörigen Spuren angeordnet.

Die Antennen A, B bzw. die Antenne ANT können, wie z.B. in Fig. 3a und 3f gezeigt, als Schlaufen oder als Dipole ausgebildet sein. Um eine möglichst grosse Entkopplung von Stationen zu erreichen, die auf parallelen Fahrbahnen vorgesehen sind, werden die Antennen A, B, ANT orthogonal zur Bewegungsrichtung der Stationen Q und R angeordnet. Die Anordnung längerer Antennen A, B, ANT längs der Bewegungsrichtung der Stationen Q und R erlaubt im Gegensatz dazu eine längere Kontaktzeit zwischen denselben. Die Antennen der Abfrage- und Antwortstationen Q und R können bei der Verwendung tieferer Sendefrequenzen ferner induktiv aneinander ankoppelbar sein.

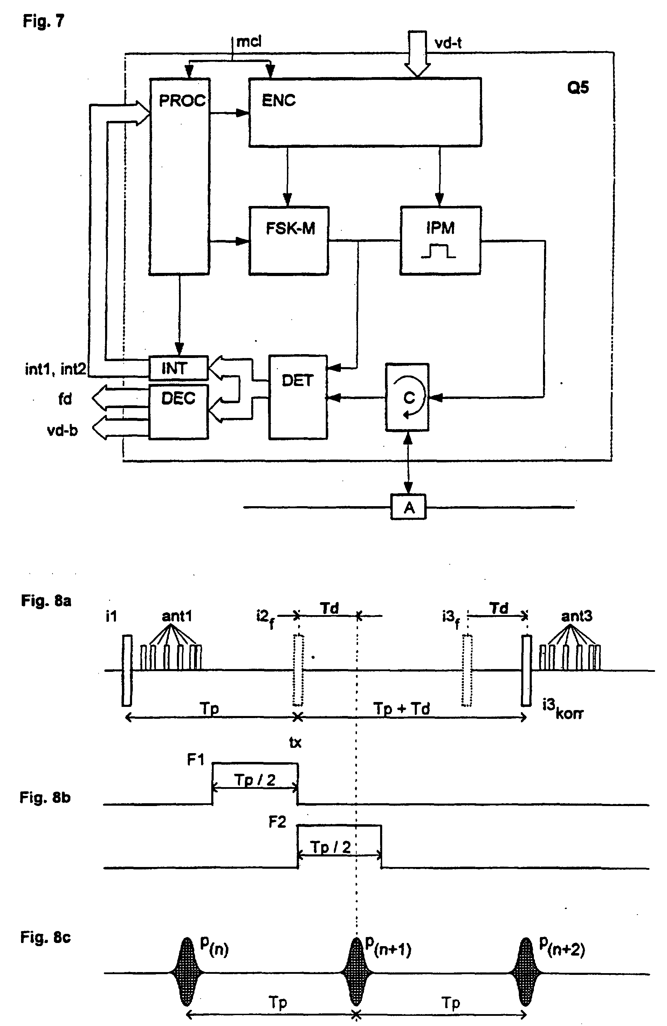

Fig. 7 zeigt ein prinzipielle Schaltungsanordnungen der Abfragestation Q5 und der Antwortstation R, bei denen in Richtung zur Antwortstation R nach dem FSK-Verfahren (frequency-shift-keying) und in Richtung zur Abfragestation Q nach dem PSK-Verfahren (phase-shift-keying) modulierte Signale übertragen werden.

Ein in der Abfragestation Q vorgesehener Prozessor PROC ist dabei mit einem Enkoder ENC sowie über einen FSK-Modulator FSK-M, einen Pulsmodulator IPM und einen Zirkulator C mit einer Antenne A verbunden. Der Zirkulator C ist ferner über einen Detektor DET mit einem Dekoder DEC verbunden. Der Ausgang des Modulators FSK-M ist ferner mit dem Referenzfrequenzeingängen des Dekoders DEC und des Detektors DET verbunden (nicht dargestellt). Der Enkoder ENC ist mit Steuereingängen des Modulators FSK-M und des Pulsmodulators IPM verbunden.

In Fig. 7 ist ferner ein Integrator INT gezeigt, der mit einem Signalausgang des Detektors DET sowie einem Steuerausgang und einem Dateneingang des Prozessors PROC verbunden ist.

Das erfindungsgemässe Verfahren wird anhand der in Fig. 8 dargestellten Signalverläufe erläutert. In Fig. 8a ist eine Sequenz von Pulsen i1, i3 dargestellt, die von einer ersten Abfragestation Q abgegeben wird. Anschliessend an die Pulse i1, i3 ist je ein Antwortsignal ant1 bzw. ant3 aufgezeigt, das von der Antwortstation R abgegeben wird (s. auch Fig. 1). In Fig. 8c ist eine Sequenz von Pulsen p ₍ₙ₎, P₍ₙ₊₁₎, p ₍ₙ₊₂₎ dargestellt, die von einer zweiten Abfragestation Q abgegeben wird. Die von beiden Abfragestation Q erzeugten Sendepulse i bzw. p werden im Normalbetrieb periodisch in zeitlichen Abständen Tp abgegeben. Falls beide Abfragestationen Q nahe beieinander angeordnet sind oder sich aufeinander zu bewegen, besteht die Gefahr, dass die erste Abfragestation Q nicht nur die Antwortsignale ant der ihr zugehörigen Antwortstation R , sondern auch die Sendesignale p der benachbarten Abfragestation Q empfängt (Die Antwortsignale benachbarter Stationen sind vernachlässigbar klein.). Nebst dem Antwortsignal ant 1 empfängt die erste Abfragestation Q daher gleichzeitig den von der zweiten Abfragestation Q abgegebenen Puls p ₍ₙ₎, wodurch das von der Antwortstation R abgegebene Antwortsignal anti verfälscht wird.

Erfindungsgemäss lassen die Abfragestationen Q daher jeweils nach einer vorzugsweise pseudozufällig gewählten Sequenz von Sendepulsen, beispielsweise zu einem Zeitpunkt tx einen Puls (i2_{f}) ausfallen. Symmetrisch um diesen Zeitpunkt tx werden zwei Zeitfenster F1, F2 bzw. Intervalle vorgesehen, die vorzugsweise je eine halbe Sendeperiode Tp/2 lang sind (s. in Fig. 8b). Innerhalb des ersten Zeitintervalls ](tx - Tp/2), tx[, d.h. während der Zeit tx - Tp/2 wird die Empfangsstufe der ersten Abfragestation Q sowie der damit verbundene Integrator INT aktiviert, so dass alle innerhalb dieser Zeit auftretenden Signale aufintegriert werden. Ebenso werden alle innerhalb des zweiten Zeitintervalls ]tx, (tx + Tp/2)[ auftretenden Signale aufintegriert. Vom Integrator INT wird daher für das erste Zeitintervall ](tx - Tp/2), tx[ ein Signal int1 und für das zweite Zeitintervall ]tx, (tx + Tp/2)[ ein Signal int2 an den Prozessor PROC abgegeben. Im Prozessor PROC werden die Signale int1, int2 miteinander verglichen. Sind die beiden Signale int1, int2 unterschiedlich, so besteht eine Abweichung des Sendezeitpunktes der ersten Abfragestation Q gegenüber dem Schwerpunkt der Sendezeiten aller weiteren Abfragestationen Q. Im vorliegenden Fall fällt der Sendepuls p ₍ₙ₊₁₎ der zweiten Abfragestation Q in das zweite Zeitintervall ]tx, (tx + Tp/2)[. Der Prozessor PROC stellt daher fest, dass das innerhalb des zweiten Zeitfensters aufintegrierte Signal int2 grösser als das erste Signal int1 ist. Durch eine zeitliche Verschiebung Td des Sendezeitpunktes der Sendesignale der ersten Abfragestation Q in Richtung auf den Schwerpunkt der Sendezeiten aller weiteren Abfragestationen Q wird erreicht, dass sich die Sendesignale der Abfragestationen Q überdecken und nicht mehr mit Antwortsignalen der Antwortstationen Q zusammenfallen. Da der beschriebene Korrekturvorgang in allen Abfragestationen Q abläuft, werden die Sendezeitpunkte aller in Kontakt zueinander stehender Abfragestationen Q, unabhängig von den Anfangsbedingungen, rasch aufeinander eingestellt bzw. synchronisiert.

Die Anzahl Sendepulse, nach der jede Abfragestation Q wenigstens einen Sendepuls ausfallen lässt, wird zufällig gewählt, damit gleichzeitige Synchronisationsversuche der Abfragestationen Q möglichst vermieden werden.

Die Anzahl Sendepulse, nach der jede Abfragestation Q wenigstens einen Sendepuls ausfallen lässt, wird vorzugsweise grösser a und kleiner b gewählt. Die Werte von a und b werden dabei derart gewählt, dass unnötige Synchronisationsversuche weitgehend vermieden, notwendige Synchronisationsversuche jedoch immer durchgeführt werden. Der Wert von a wird beispielsweise klein gewählt, falls die Stationen ST in schnell bewegten Verkehrsmitteln vorgesehen sind.

Die zeitliche Verschiebung Td wird derart gewählt, dass die Sendezeitpunkte der Abfragestationen Q stetig konvergieren und rasch synchronisiert sind. Vorzugsweise wird die zeitliche Verschiebung Td im Bereich Tp/8 bis Tp/4 gewählt.

Vorzugsweise wird eine Verschiebung des Sendezeitpunktes jedoch nur vorgenommen, falls die Differenz der Signale int1, int2 einen vorgesehenen Schwellwert überschreitet. Falls genauere Angaben über den Schwerpunkt der Sendesignale benachbarter Abfragestationen Q ermittelt werden sollen, können an Stelle von nur zwei Intervallen vor und nach dem Zeitpunkt tx auch mehrere Intervalle vorgesehen werden. Das Mass der Verschiebung der Sendepulse wird dabei entsprechend der zum Zeitpunkt tx relativen Lage des Intervalls bestimmt, in dem das grösste Signal ermittelt wird. Dabei wird die Verschiebung der Sendepulse vorzugsweise nur dann anhand des Intervalls bestimmt, in dem das grösste Signal ermittelt wurde, wenn dieses Intervall auf der Seite des Zeitpunktes tx liegt, auf der die Summe aller Signale grösser ist, als die Summe der auf der anderen Seite des Zeitpunktes tx ermittelten Signale.

Das Mass der Verschiebung der Sendepulse kann auch entsprechend der zum Zeitpunkt tx relativen Lage des Schwerpunktes der in einem Fenster F1, F2 auftretenden Signale ermittelt werden. Dazu werden vorzugsweise für jedes Zeitfenster F1, F2 die Momente aus den empfangenen Signalen und deren zum Zeitpunkt tx relativen Empfangszeitpunkten t_{empf_rel} = t_{empf} - tx gebildet und aufintegriert.

Um zu vermeiden, dass Antwortsignale zu vorangehenden Sendepulsen in den Bereich des Fensters F1 gelangen und die Messung verfälschen, wird vorzugsweise bereits vor dem Zeitpunkt tx (z.B. zu den Zeitpunkten tx - TP; tx - 2Tp) mindestens ein weiterer Sendepuls nicht ausgesendet.

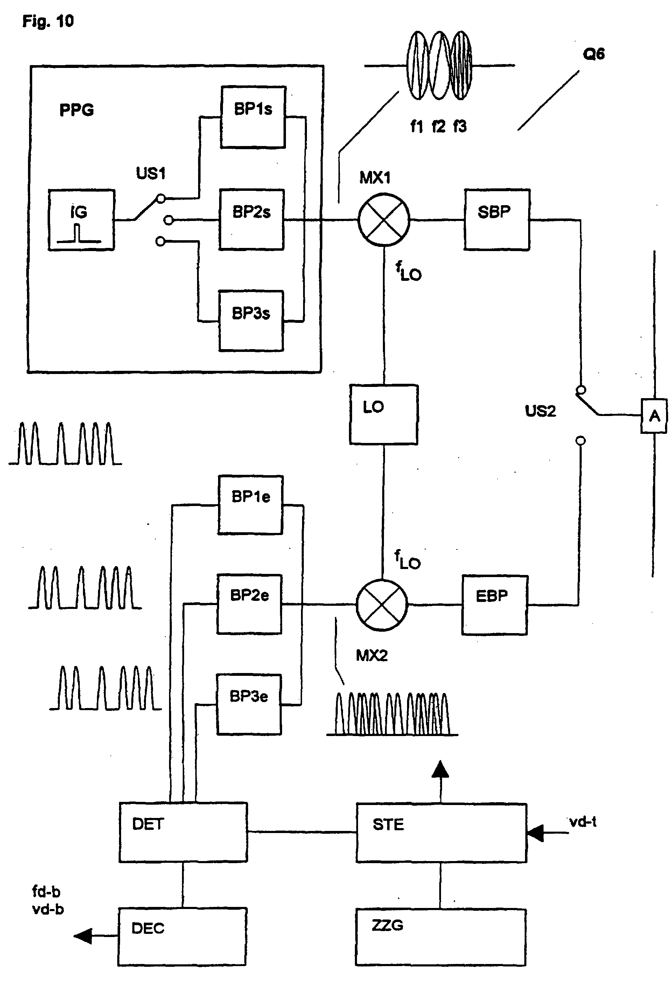

Bei zwei oder mehreren parallel geführten Geleisen besteht ferner das Problem, dass Antwortsignale von der Antwortstation R nicht nur zu der Abfragestation Q gelangen, die den Abfragepuls ausgesendet hat, sondern auch zu Stationen, die sich auf Nachbargeleisen befinden. Antwortsignale, die von einer Abfragestation Q empfangen werden, die nicht selbst, diese Antwortsignale abgefragt bzw. ausgelöst hat, führen dabei zu Fehlinformationen, die unter allen Umständen zu vermeiden sind. In Fig. 9 ist eine Situation dargestellt, bei der zwei auf parallelen Geleisen TR1, TR2 geführte Züge ZK1, ZK2 nahe beieinander vorbeifahren. Der Zug ZK1 weist dabei die Serienummer SN-0001 und der Zug ZK2 weist die Serienummer SN-0002 auf. Beim ersten Geleise TR1 ist eine Antwortstation R1 vorgesehen, die von einer im Zug ZK1 vorgesehenen ersten Abfragestation Q1 mit Abfragepulsen beaufschlagt wird. Antwortsignale werden von der Antwortstation R1 zur ersten Abfragestation Q1 reflektiert, gelangen jedoch in störendem Masse oft auch zu einer im Zug ZK2 vorgesehenen zweiten Abfragestation Qx, da die Streckendämpfung zwischen den beiden Geleisen TR1 und TR2 nicht genügend hoch ist. Diese Probleme könnten vermieden werden, indem Antwortstationen R nur an Stellen mit genügend grossem Abstand zwischen den Geleisen vorgesehen werden. Oft werden Geleise jedoch über längere Strecken nahe beieinander geführt. Ferner müssen insbesondere an Verkehrsknotenpunkten Abfragestationen Q vermehrt eingesetzt werden. Erfindungsgemäss wird daher jeder Abfragepuls oder jede Sequenz von Abfragepulsen derart mit einer für jeden Zug ZK bzw. für jede Abfragestation Q individuellen Modulation versehen. Z.B. könnte die Modulation von der Serienummer der Lokomotive oder einem weiteren individuell verschiedenen Codewort abgeleitet werden. Durch die Korrelation der von der Antwortstation R reflektierten Antwortsignale mit diesem Codewort kann in der ersten oder zweiten Abfragestation Q1 bzw. Qx daher leicht festgestellt werden, ob die empfangenen Signale zu den eigenen Abfragesignalen korrespondieren und weiterverarbeitet oder unterdrückt werden sollen. Grundsätzlich können die von den Abfragestationen Q abgegebenen Abfragepulse amplituden-, frequenz- oder phasenmoduliert werden. Bevorzugt angewendet wird die Amplitudenmodulation einer Sequenz von Abfragepulsen. Dabei werden innerhalb der Pulssequenz ein oder mehrere Abfragepulse bezüglich deren Amplitude verändert oder vollständig ausgelassen. Falls die empfangenen Signale nicht mit den Abfragepulsen bzw. dem entsprechenden Codewort korrelieren, stammen diese Signale von einer fremden Antwortstation R, die an einem z.B. parallel geführten Geleise vorgesehen ist und die Abfragepulse einer weiteren Abfragestation Q reflektiert. Diese nicht korrelierenden Fremdsignale werden daher, in dem in Fig. 9 dargestellten Fall in der zweiten im Zug ZK vorgesehenen Abfragestation Qx nicht weiter verarbeitet. Zu erwähnen ist ferner, dass durch Abfragepulse, die vom Zug ZK2 zu der am Geleise TR1 vorgesehenen Antwortstation R gelangen, nur Antwortsignale von geringer Grösse ausgelöst werden, die den vorzugsweise in der Empfangsstation des Zuges ZK2 gesetzten Schwellwert nie überschreiten (doppelte Streckendämpfung) und daher unterdrückt werden.

Eine weitere Möglichkeit zur Übertragung von Daten von der Abfragestation Q zur Antwortstation R und zur gleichzeitigen Vermeidung von gegenseitigen Störungen kann dadurch erfolgen, dass die Abfragestation Q für jeden Abfragezyklus mehrere vorzugsweise zeitlich versetzte trägerfrequente Pulse unterschiedlicher Frequenzlage aussendet. Beispielsweise wird in jedem Abfragezyklus eine Dreiergruppe von Pulsen ausgesendet, die ohne gegenseitige Überlagerung aneinander anschliessen und die Frequenz f1, f2 bzw. f3 aufweisen. Mögliche Frequenzfolgen für die Pulse sind daher f1, f2, f3; f1, f3, f2; f2, f1, f3; f2, f3, f1; f3, f1, f2 und f3, f2, f1. Jeder dieser Frequenzfolgen, die empfangsseitig eindeutig identifiziert werden können kann ein Datenbit, eine Bitkombination oder ein Sonderzeichen zugeordnet werden. Den beschriebenen Frequenzfolgen können Datenbitkombinationen beliebig zugeordnet werden. Beispielsweise kann die folgende Zuordnung gewählt werden :
f1, f2, f3 ≅ "0"; f1, f3, f2 ≅ "1"; f2, f1, f3 ≅ "00"; f2, f3, f1 ≅ "10"; f3, f1, f2 ≅ "01" und f3, f2, f1 ≅ "11".

Die Pulspakete mit z.B. drei aneinander anschliessenden Pulsen werden mit einer, im Vergleich zu den Antwortpulsen, sehr hohen Sendeleistung übertragen. Störungen treten bei der Datenübertragung von der Abfragestation Q zur Antwortstation R kaum auf. Trotzdem kann eine redundante Kodierung der Daten verwendet werden, um die Wahrscheinlichkeit des Auftretens von Störungen weiter zu reduzieren. Von der Antwortstation R werden als Antwort auf das Abfrage-Pulspaket drei Pulssequenzen mit identischem Informationsgehalt reflektiert, die sich bezüglich der Frequenzlage unterscheiden. D.h., die Antwortpulse werden mit den Trägerfrequenzen f1, f2 und f3 übertragen. Falls eine dieser Frequenzen durch Fremdsignale gestört ist, kann durch einen Vergleich der drei Pulssequenzen in der Abfragestation Q festgestellt werden, welche dieser Pulssequenzen gestört wurde und deshalb als unbrauchbar zu verwerfen ist. Weiterverarbeitet wird jeweils nur eine von zwei übereinstimmenden Pulssequenzen. Falls davon ausgegangen werden muss, dass jeweils mehr als eine der verwendeten Trägerfrequenzen gestört wird, so ist die Anzahl Pulse unterschiedlicher Frequenz pro Pulspaket entsprechend zu erhöhen.

Ferner erlaubt dieses Verfahren in eleganter Weise die Feststellung, ob die von der Abfragestation Q empfangenen Signale von dieser Abfragestation Q oder von einer fremden Station ausgelöst bzw. abgefragt wurden. Dies geschieht durch einen Vergleich der Frequenzfolge der Antwortpulssequenzen mit der Frequenzfolge der von der Abfragestation Q ausgesendeten Abfragepulse. Antwortpulsssequenzen werden in der Abfragestation Q nur weiterverarbeitet, falls die Frequenzfolgen übereinstimmen.

Die Anwendung dieses Verfahrens ergibt daher eine hohe Datenübertragungsrate von der Abfragestation Q zur Antwortstation R bei gleichzeitiger erheblicher Verbesserung der Störsicherheit bei der Datenübertragung von der Antwortstation R zur Abfragestation Q.

In Fig. 10 ist eine Abfragestation Q6 gezeigt, die zur Abgabe und zum Empfang der beschriebenen Pulspakete geeignet ist. Darin ist ein Pulspaketgenerator PPG vorgesehen, in dem Pulsgenerator IG über einen ersten Umschalter US1 mit Bandpassfiltern BP1s, BP2s und BP3s verbindbar ist, deren Ausgänge über eine erste Mischstufe MX1, einen (nicht dargestellten Sendeverstärker, ein Sende-Bandpassfilter SBP sowie einen zweiten Umschalter US2 mit einer Sendeantenne A verbindbar ist. Die Antenne A ist über den Umschalter US2 mit dem Eingang eines Empfangs-Bandpassfilters EBP verbindbar, dessen Ausgang über eine zweite Mischstufe MX2 mit den Eingängen von drei weiteren Bandpassfiltern BP1e, BP2e, BP3e verbunden sind (da der Empfangs- und der Sendeteil nie gleichzeitig im Betrieb sind, könnten die Bandpassfilter BP1s, BP2s und BP3s auch im Multiplexbetrieb eingesetzt werden). Die Ausgänge der Bandpassfilter BP1e, BP2e, BP3e sind je mit einem Signal-Eingang eines Detektors DET verbunden, der ferner mit einem Dekoder DEC und einer Steuereinheit STE verbunden ist. Die Steuereinheit, der zu übertragende Daten vd-t zugeführt werden, ist ferner mit den beiden Umschaltem US1 und US2, dem Pulsgenerator IG sowie mit einem Zufallszahlgenerator ZZG verbunden. Ferner wird je einem weiteren Eingang der Mischstufen MX1, MX2 von einem Lokaloszillator eine Referenzfrequenz zugeführt.

Die Schaltung funktioniert wie folgt:

In Abhängigkeit von einer Zufallszahl (falls keine Daten an die Antwortstation R zu übertragen sind) oder von den zu übertragenden Daten vd-t werden in der Steuereinheit STE die abzusendenden Frequenzfolgen festgelegt. Der Pulsgenerator IG und die auf die Frequenzen f1, f2 und f3 abgestimmten Bandpassfilter BP1s, BP2s und BP3s sind dazu vorgesehen, das Pulspaket mit der vorgesehenen Frequenzfolge zu erzeugen. Dazu wird der Pulsgenerator IG über den Umschalter US1 sequentiell mit den Bandpassfiltem BP1s, BP2s und BP3s verbunden und aktiviert. Dabei wird zeitlich gestaffelt jedem dieser Bandpassfilter BP1s, BP2s und BP3s ein Dirac-Puls zugeführt, aus dessen (idealerweise unendlich breitem) Frequenzspektrum Signale mit den Frequenzen f1, f2 bzw. f3 an die Mischstufe MX1 weitergeleitet werden. Durch die Steuereinheit STE könnten stattdessen auch auf die Frequenzen f1, f2 bzw. f3 abgestimmte Oszillatoren sequentiell mit der Mischstufe verbunden werden, um das in Fig. 10 dargestellte Pulspaket zu erzeugen. In der Mischstufe MX1 werden die von den Bandpassfiltem BP1s, BP2s und BP3s abgegebenen Signale mit einem von dem Lokaloszillator LO abgegebenen Signal der Frequenz f_{LO} gemischt und an das Sende-Bandpassfilter SBP abgegeben, welches z.B. die Signale mit den Frequenzen f_{LO} + f1, f_{LO} + f2 und f_{LO} + f3 über den Umschalter US2 an die Antenne A abgibt und die restlichen Mischprodukte unterdrückt. Nach der Abgabe des Pulspaketes wird die Antenne A über den Umschalter US2 mit dem Empfangs-Bandpassfilter EBP verbunden. Das von der Antenne A abgegebene Pulspaket gelangt z.B. zu der in Fig. 7 beschriebenen Antwortstation R und wird dort reflektiert. Durch das Oberflächenwellen-Bauteil OFW wird daher für jeden Puls des Pulspakets eine Pulssequenz reflektiert, die ebenfalls die Frequenz f1, f2 bzw. f3 aufweist. Die drei Pulssequenzen gelangen daher gegenseitig überlagert zur Mischstufe MX2, werden darin mit einem vom Lokaloszillator LO abgegebene Signal der Frequenz f_{LO} gemischt und gelangen zu den Bandpassfiltern BP1e, BP2e und BP3e, von denen jede eine Pulssequenz entsprechender Frequenz aus dem Signalgemisch entnimmt und an den Detektor DET abgibt, Der Detektor DET stellt fest, ob die Reihenfolge der eintreffenden Pulssequenzen der Frequenzfolge entspricht, die von der Steuereinheit STE festgelegt und dem Detektor DET gemeldet wurde. Falls die Reihenfolge nicht der festgelegten Frequenzfolge entspricht, liegt eine Fremdsignal vor, dass nicht weiterverarbeitet wird. Falls Übereinstimmung herrscht, wird festgestellt, ob die drei empfangenen Pulssequenzen übereinstimmen. Falls mindestens zwei Pulssequenzen übereinstimmen, wird eine der übereinstimmenden Pulssequenzen an den Dekoder DEC abgegeben, der gegebenenfalls übertragene feste oder variable Daten fd-b bzw. vd-b daraus entnimmt und weiterleitet. In der Antwortstation R werden, anstatt der beiden in Fig. 7 gezeigten Bandpassfilter BP1, BP2 vorzugsweise drei auf die Frequenzen f1, f2 und f3 abgestimmte Bandpassfilter verwendet, deren Ausgänge mit einem Detektor verbunden sind, der die Reihenfolge der im übermittelten Pulspaket enthaltenen Frequenzen feststellt und einem Dekoder mitteilt, welcher die den Frequenzfolgen entsprechenden Daten vd-t ermittelt und weiterleitet.

Die durch das beschriebene Verfahren erzielten Vorteile (höhere Störsicherheit, erhöhter Datentransfer pro Sendezyklus) wird dabei mit einer nur geringfügig höheren Sendedauer erreicht, d.h. die Sendedauer erhöht sich um die Differenz der Länge des Pulspaketes und der Pulsweite eines einzelnen Pulses. Die Sendedauer wird bei Pulspaketen mit drei Pulsen daher um zwei Pulsweiten veriängert. Ein Abfragezyklus verlängert sich dabei um weniger als 10%. Das Verfahren erlaubt daher mehreren Abfragestationen Q gleichzeitig auf eine einzelne Antwortstation R zuzugreifen, da jede Abfragestation Q Fremdsignale sofort erkennt. Falls Fremdsignale empfangen werden, kann der Abfragevorgang unterbrochen und nach einer festgelegten oder zufällig gewählten Zeit wiederaufgenommen werden, so dass die Station, durch die die Fremdsignale ausgelöst wurden, den Datenaustausch mit der Antwortstation R zuerst beenden kann.

Durch den Einsatz der in Fig. 3g und 3h gezeigten Antwortstationen R7 und R8 die ein Oberflächenwellen-Bauteil P-OFW3 bzw. P-OFW4 aufweisen, lassen sich Störungen weiter reduzieren. Dabei ist auf jedem Oberflächenwellenbauteil P-OFW3 bzw. P-OFW4 ein dispersiver Eingangs-Interdigitalwandler IDWe vorgesehen, der über einen Eingang INP bzw. INP/OUT empfangene Abfragesignale moduliert und in Form von Oberflächenwellen an (z.B.) vier Ausgangs-Interdigitalwandler IDWa, IDWb, IDWc und IDWd weiterleitet, welche die Oberflächenwellen in elektrische Signale umwandeln und an einen Ausgang OUT bzw. INP/OUT abgeben. Ein zweimaliges Durchlaufen des Eingangs-Interdigitalwandlers IDWe, das zu einer Demodulation der Signale führen würde, wird dadurch vermieden. In der Abfragestation Q6 lassen sich die modulierten Antwortsignale leicht von Abfragesignalen unterscheiden, die von weiteren Abfragestationen Q ausgesendet wurden. Fremdsignale, die von nicht-synchronisierten Abfragestationen stammen und die sich den Antwortsignalen daher überlagern, können z.B. durch Korrelation der Antwortsignale mit dem erwarteten Signalverlauf ermittelt und unterdrückt werden. Auf eine Synchronisation der Abfragestationen Q kann daher verzichtet werden. Ferner kann vorzugsweise vorgesehen werden, dass die Abfragestationen Q expandierte Pulse niedriger Leistung abgeben, die durch den Eingangs-Interdigitalwandler IDWe der Antwortstation R7 bzw. R8 komprimiert und über die Ausgangs-Interdigitalwandler IDWa, IDWb, IDWc und IDWd mit relativ hoher Amplitude zurückgesandt werden. Aufgrund der niedrigen Amplitude der Abfragesignale werden Störungen benachbarter Stationen vermieden. Hingegen wird durch die hohe Amplitude der komprimierten Antwortsignale ein verbesserter Störabstand beim Datenverkehr von der Antwortstation R7 bzw. R8 zur Abfragestation Q6 erzielt. Die Antwortsignale können in den Antwortstationen R7 und R8 ferner, wie in den oben beschriebenen Antwortstationen R1 bis R6, amplituden- oder phasenmoduliert werden. Das Verhalten der Interdigitalwandler IDWa, IDWb, IDWc und IDWd lässt sich nämlich mit denselben Mitteln beeinflussen wie das Verhalten der in Fig. 3c und 3d gezeigten Reflektoren. In der Antwortstation R7 bzw. R8 sind die Ausgangs--Interdigitalwandler IDWa, IDWb, IDWc und IDWd dazu über Schalter SW und änderbare komplexe Impedanzen mit Erde verbunden oder verbindbar.

In Fig. 3g bilden der Eingangs- und die Ausgangs-Interdigitalwandler IDW eine zwei-Tor-Schaltung. Der Ein- und Ausgang INP bzw. OUT werden dabei vorzugsweise über einen Umschalter oder einen Zirkulator C mit der Sende- und Empfangsantenne ANT verbunden. In Fig. 3h sind alle Interdigitalwandler IDW über eine gemeinsame Sammelschiene zu einer ein-Tor-Schaltung verbunden, die einen gemeinsamen Ein- und Ausgang aufweist.

Nebst den einleitend beschriebenen OFW-Bauteilen können auch herkömmliche Leitungen verwendet werden, in denen Reflexionsstellen vorgesehen sind, die z.B. durch die lokale Änderung der Impedanz bzw. durch den gezielten Einbau von Störstellen in verschiedenen Abschnitten der Leitung realisiert werden. Vorzugsweise werden kurze Verzögerungsleitungen vorgesehen, die eine geringe Wellenausbreitungsgeschwindigkeit aufweisen. Beispielsweise werden Koaxialleitungen eingesetzt, die ein eine hohe Dielektrizitätszahl aufweisendes Dielektrikum enthalten. (Ferner ist bekannt, dass die Ausbreitungsgeschwindigkeit von elektromagnetischen Wellen in Stoffen mit hoher Permeabilitätszahl ebenfalls kleiner ist.) Vorzugsweise werden daher keramische Materialien für das Dielektrikum verwendet, die bekannterweise eine hohe Dielektrizitätszahl (> 100) aufweisen. Z.B. wird, wie in Fig. 6 gezeigt, eine Verzögerungsleitung derart gebildet, dass die Innen- und die Aussenwände röhrenförmiger keramischer Elemente KERD zumindest teilweise mit je einer Metallschicht überzogen werden, welche den Innenleiter IL und Aussenleiter AL einer kurzen Koaxialleitung T bilden. An den Verbindungsstellen der einzelnen Koaxialleitungen T1, T2, die je eine entsprechend dem zu übertragenden Codewort vorgewählte Länge aufweisen und die zu einer längeren Koaxialleitung zusammengefügt werden, können dabei Reflexionsstellen vorgesehen werden. Nötigenfalls wird dazu der Innen- und der Aussenleiter IL, AL an diesen Verbindungsstellen durch eine Spule IND oder einen Kondensator CAP miteinander verbunden, die z.B. auf einer oder beiden Frontseiten der des keramischen Dielektrikums KERD direkt auflegiert sind. Die einzelnen Keramikelemente KERD, bzw. deren Innenleiter IL, bzw. deren Aussenleiter AL bzw. die frontseitigen Legierungen IND; CAP werden z.B. in einem Ofen verbunden. Ferner können an den Verbindungsstellen der Koaxialleitungen T1, T2 Zwischenstücke ZT vorgesehen sein, die z.B. ein anderes Dielektrikum aufweisen und/oder mit einem andersartigen Metall beschichtet sind. Ferner kann der Innenleiter IL auch durch einen veränderbaren Kondensator (oder eine veränderbare Induktivität), z.B. eine Kapazitätsdiode mit dem Aussenleiter AL verbunden werden. Durch diese Massnahme könnten die Reflexionsstellen wahlweise zu- oder abgeschaltet werden.

## Patentansprüche

1. Verfahren zur Datenübertragung zwischen einer Abfragestation (Q), von der Abfragesignale ausgesendet werden, und einer Antwortstation (R), von der nach Empfang eines Abfragesignals ein Antwortsignal ausgesendet wird, dem ein zur Identifikation der Antwortstation (R) dienendes Codewort aufgeprägt wird, welches in der Abfragestation (Q) nach der Demodulation des Antwortsignals decodiert wird, wobei mindestens die Antwortstation (R) eine mit einem zur Leitung von Oberflächenwellen geeigneten Substrat versehene Verzögerungsleitung (OFW) aufweist, die mit Reflexionsstellen (IDW; IDWa, ..., IDWd; RFT) versehen ist, von denen wenigstens eine Reflexionsstelle (IDW) zur Einspeisung von Abfragesignalen und wenigstens eine Reflexionsstelle (IDW, IDWa, ..., IDWd) zur Auskopplung von Antwortsignalen verwendet wird, die in Form einer Pulssequenz zur Abfragestation (Q) zurück übertragen und dort demoduliert bzw. decodiert wird, **dadurch gekennzeichnet, dass** die der Antwortstation (R) zugesandten Abfragesignale phasen- oder frequenzmoduliert werden und dass der Antwortstation (R) variable Daten (vd-b) zugeführt werden, die dem Antwortsignal zusätzlich zum Codewort aufgeprägt werden, so dass nebst einem ersten Datenkanal zur Übertragung von fest zugeteilten Codeworten ein zweiter Datenkanal zur Übertragung von variablen Daten (vd-b) geschaffen wird.

2. Verfahren nach Anspruch 1, **dadurch gekennzeichnet, dass** die zur Abfragestation (Q) rückübertragene Pulssequenz in der Antwortstation (R) in Abhängigkeit von den an die Abfragestation (Q) zu übertragenden Daten (vd-b) codiert oder moduliert wird.

3. Verfahren nach Anspruch 2, **dadurch gekennzeichnet, dass** die an der Verzögerungsleitung (OFW) ausgekoppelte Pulssequenz in Abhängigkeit der zu übertragenden Daten (vd-b) in einem Modulator (PM) phasenmoduliert und zurück zur Abfragestation (Q) übertragen wird, wobei alle oder nur einzelne Pulse der an der Verzögerungsleitung (OFW) ausgekoppelten Pulssequenz phasenmoduliert weiden und unmodulierte Pulse gegebenenfalls als Referenz für die Demodulation der übertragenen Pulssequenz verwendet werden.

4. Verfahren nach Anspruch 2 oder 3, **dadurch gekennzeichnet, dass** das Reflektionsverhalten zumindest eines der auf der Verzögerungsleitung (OFW) vorgesehenen Reflexionsstellen (RFT; IDWa, ...,IDWd) durch Zuschaltung einer reellen oder komplexen Impedanz (IMP1, ..., IMP5; SW1, ..., SWn; IMPC-I) oder durch Änderung einer zugeschalteten reellen oder komplexen Impedanz (IMP1, ..., IMP5; SW1, ..., SWn; IMPC-I) in Abhängigkeit der zu übertragenden Daten (vd-b) derart beeinflusst wird, dass als Antwort auf ein Abfragesignal eine Sequenz von Pulsen gleicher oder unterschiedlicher Intensität abgegeben wird.

5. Verfahren nach einem der Ansprüche 1 bis 4, **dadurch gekennzeichnet, dass**
a) zur Übertragung von Daten zwischen der Abfragestation (Q) und der Antwortstation (R) expandierte trägerfrequente Abfragepulse verwendet werden, deren Expansionsrichtung derart gewählt wird, dass für ein zu übertragendes Datenbit "1" die Expansion von einer Frequenz f1 gegen eine Frequenz f2 und für ein zu übertragendes Datenbit "0" die Expansion von der Frequenz f2 gegen die Frequenz f1 erfolgt oder dass
b) der expandierte Puls in mehrere Bereiche (B1, ..., Bn) unterteilt wird, von denen mindestens einer in Abhängigkeit von zu übertragenden variablen Daten (vd-b) markiert wird, dass zur Markierung der Bereiche (B1, ..., Bn) der expandierte Puls an den entsprechenden Positionen amplituden- oder phasenmoduliert wird und dass die Signale nach der Übertragung decodiert werden.

6. Übertragungssystem zur Datenübertragung zwischen einer Abfragestation (Q), von der Abfragesignale ausgesendbar sind und einer Antwortstation (R), von der nach Empfang eines Abfragesignals ein Antwortsignal aussendbar ist, dem ein zur Identifikation der Antwortstation (R) dienendes Codewort aufprägbar ist, welches in der Abfragestation (Q) nach der Demodulation des Antwortsignals decodierbar ist, wobei mindestens die Antwortstation (R) eine mit einem zur Leitung von Oberflächenwellen geeigneten Substrat versehene Verzögerungsleitung (OFW) aufweist, die mit Reflexionsstellen (IDW; IDWa, ..., IDWd; RFT) versehen ist, von denen wenigstens eine Reflexionsstelle (IDW) zur Einspeisung von Abfragesignalen und wenigstens eine Reflexionsstelle (IDW, IDWa, ..., IDWd) zur Auskopplung von Antwortsignalen verwendbar ist, die in Form einer Pulssequenz zur Abfragestation (Q) zurück übertragbar und dort demodulierbar bzw. decodiertbar sind, **dadurch gekennzeichnet, dass** die der Antwortstation (R) zugesandten Abfragesignale phasen- oder frequenzmoduliert sind und dass der Antwortstation (R) variable Daten (vd-b) zuführbar sind, die dem Antwortsignal zusätzlich zum Codewort aufprägbar sind, so dass nebst einem ersten Datenkanal zur Übertragung von fest zugeteilten Codeworten ein zweiter Datenkanal zur Übertragung von variablen Daten (vd-b) vorhanden ist.

7. Übertragungssystem nach Anspruch 6, **dadurch gekennzeichnet, dass** die zur Abfragestation (Q) rückübertragene Pulssequenz in der Antwortstation (R) in Abhägigkeit der an die Abfragestation (Q) übertragenen Daten (vd-b) codierbar oder modulierbar ist.

8. Übertragungssystem nach Anspruch 7, **dadurch gekennzeichnet, dass** die an der Verzögerungsleitung (OFW) ausgekoppelte Pulssequenz in Abhängigkeit der zu übertragenden Daten (vd-b) in einem Modulator (PM) phasenmodulierbar ist und zurück zur Abfragestation (Q) übertragbar ist, wobei alle oder nur einzelne Pulse der an der Verzögerungsleitung (OFW) ausgekoppelten Pulssequenz phasenmodulierbar sind und unmodulierte Pulse gegebenenfalls als Referenz für die Demodulation der übertragenen Pulssequenz verwendbar sind.

9. Übertragungssystem nach Anspruch 7 oder 8, **dadurch gekennzeichnet, dass** das Reflektionsverhalten zumindest einer der auf der Verzögerungsleitung (OFW) vorgesehenen Reflexionsstellen (RFT; IDWa, ...,IDWd) durch Zuschaltung einer reellen oder komplexen Impedanz (IMP1, ..., IMP5; SW1, ..., SWn; IMPC-I) oder durch Änderung einer zuschaltbaren reellen oder komplexen Impedanz (IMP1, ..., IMP5; SW1, ..., SWn; IMPC-I) in Abhängigkeit der zu übertragenden variablen Daten (vd-b) derart beeinflussbar ist, dass als Antwort auf ein Abfragesignal eine Sequenz von Pulsen gleicher oder unterschiedlicher Intensität abgebbar ist.

10. Übertragungssystem nach einem der Ansprüche 6 bis 9, **dadurch gekennzeichnet, dass**
a) zur Übertragung von Daten zwischen der Abfragestation (Q) und der Antwortstation (R) expandierte trägerfrequente Abfragepulse verwendbar sind, deren Expansionsrichtung derart gewählt wird, dass für ein zu übertragendes Datenbit "1" die Expansion von einer Frequenz f1 gegen eine Frequenz f2 und für ein zu übertragendes Datenbit "0" die Expansion von der Frequenz f2 gegen die Frequenz f1 erfolgt oder dass
b) der expandierte Puls in mehrere Bereiche (B1, ..., Bn) unterteilbar ist, von denen mindestens einer in Abhängigkeit von zu übertragenden Daten markierbar ist, dass zur Markierung der Bereiche (B1, ..., Bn) der expandierte Puls an den entsprechenden Positionen amplituden- oder phasenmodulierbar ist und dass die Signale nach der Übertragung decodierbar sind.

## Claims

1. Method of data transmission between an interrogator (Q) from which interrogation signals are transmitted, and a transponder (R) from which, on receipt of an interrogation signal, a reply signal is transmitted onto which a code word used to identify the transponder (R) is imprinted, said code word being decoded in the interrogator (Q) after demodulation of the reply signal, whereby at least the transponder (R) has a SAW delay line (OFW) provided with a substrate suitable for conducting surface acoustic waves, said delay line being provided with reflection points (IDW; IDWa, ..., IDWd; RFT) of which at least one reflection point (IDW, IDWa, ..., IDWd) is used to inject interrogation signals and at least one reflection point (IDW) is used to couple out reply signals which are transmitted, in the form of a pulse sequence, back to the interrogator (Q) where they are demodulated or decoded, **characterised in that** the interrogation signals transmitted to the transponder (R) are phase- or frequency-modulated and that the transponder (R) is fed variable data (vd-b) which is imprinted on the reply signal in addition to the code word so that, in addition to a first data channel for transmitting permanently allocated code words, a second data channel is created for transmitting variable data (vd-b).

2. Method according to Claim 1, **characterised in that** the pulse sequence transmitted back to the interrogator (Q) is coded or modulated in the transponder (R) as a function of the data (vd-b) to be transmitted to the interrogator (Q).

3. Method according to Claim 2, **characterised in that** the pulse sequence coupled out at the delay line (OFW) is phase-modulated in a modulator (PM) as a function of the data to be transmitted (vd-b) and transmitted back to the interrogator (Q), whereby all or only individual pulses of the pulse sequence coupled out at the SAW delay line (OFW) are phase-modulated, and unmodulated pulses are if necessary used as a reference for demodulation of the transmitted pulse sequence.

4. Method according to Claims 2 or 3, **characterised in that** the reflection characteristic of at least one of the reflection points (RFT; IDWa, ..., IDWd) provided on the SAW delay line (OFW)) is influenced by connecting an ohmic or complex impedance (IMP1, ..., IMP5; SW1, ..., SWn; IMPC-I) or by varying a connected ohmic or complex impedance (IMP1, ..., IMP5; SW1, ..., SWn; IMPC-I) as a function of the data (vd-b) to be transmitted, such that a sequence of pulses of identical or differing intensity is produced in response to an interrogation signal.

5. Method according to one of Claims 1 to 4, **characterised in that**
a) to transmit data between the interrogator (Q) and the transponder (R), expanded carrier-frequency interrogation pulses are used whose expansion direction is selected such that, for a data bit "1" to be transmitted, the expansion is from a frequency f1 to a frequency f2 and, for a data bit "0" to be transmitted, the expansion is from the frequency f2 to the frequency f1, or that
b) the expanded pulse is subdivided into several areas (B1, ..., Bn) of which at least one is marked as a function of the variable data (vd-b) to be transmitted, that for marking of the areas (B1, ..., Bn) the expanded pulse is amplitude- or phase-modulated at the corresponding positions and that the signals are decoded after transmission.

6. Method of data transmission between an interrogator (Q) from which interrogation signals can be transmitted and a transponder (R) from which, on receipt of an interrogation signal, a reply signal can be transmitted onto which a code word used to identify the transponder (R) can be imprinted, said code word being decodable in the interrogator (Q) after demodulation of the reply signal, whereby at least the transponder (R) has a SAW delay line (OFW) provided with a substrate suitable for conducting surface acoustic waves, said delay line being provided with reflection points (IDW; IDWa, ..., IDWd; RFT) of which at least one reflection point (IDW) can be used to inject interrogation signals and at least one reflection point (IDW, IDWa, ..., IDWd) can be used to couple out reply signals which can be transmitted, in the form of a pulse sequence, back to the interrogator (Q) where they can be demodulated or decoded, **characterised in that** the interrogation signals transmitted to the transponder (R) are phase- or frequency-modulated and that the transponder (R) can be fed variable data (vd-b) which can be imprinted on the reply signal in addition to the code word so that, in addition to a first data channel for transmitting permanently allocated code words, a second data channel for transmitting variable data (vd-b) is available.

7. Transmission system according to Claim 6, **characterised in that** the pulse sequence transmitted back to the interrogator (Q) can be encoded or modulated in the transponder (R) as a function of the data (vd-b) transmitted to the interrogator (Q).

8. Transmission system according to Claim 7, **characterised in that** the pulse sequence coupled out at the SAW delay line (OFW) can be phase-modulated in a modulator (PM) as a function of the data to be transmitted (vd-b) and can be transmitted back to the interrogator (Q), whereby all or only individual pulses of the pulse sequence coupled out at the delay line (OFW) can be phase-modulated, and unmodulated pulses can if necessary be used as a reference for demodulation of the transmitted pulse sequence

9. Transmission system according to Claim 7 or 8, **characterised in that** the reflection behaviour of at least one of the reflection points (RFT; IDWa, ..., IDWd) provided on the SAW delay line (OFW) ) can be influenced by connecting an ohmic or complex impedance (IMP1, ..., IMP5; SW1, ..., SWn; IMPC-I) or by varying a connected ohmic or complex impedance (IMP1, ..., IMP5; SW1, ..., SWn; IMPC-I) as a function of the variable data (vd-b) to be transmitted, in such as way that a sequence of pulses of identical or differing intensity can produced in response to an interrogation signal.

10. Transmission system according to one of Claims 6 to 9, **characterised in that**
a) to transmit data between the interrogator (Q) and the transponder (R), expanded carrier-frequency interrogation pulses can be used whose expansion direction is selected such that, for a data bit "1" to be transmitted, the expansion is from a frequency f1 to a frequency f2 and, for a data bit "0" to be transmitted, the expansion is from the frequency f2 to the frequency f1, or that
b) the expanded pulse can be subdivided into several areas (B1, ..., Bn) of which at least one is marked as a function of the data to be transmitted, that for marking of the areas (B1, ..., Bn) the expanded pulse can be amplitude- or phase-modulated at the corresponding positions and that the signals can be decoded after transmission.

## Revendications

1. Procédé de transmission de données entre une station (Q) d'interrogation par laquelle des signaux d'interrogation sont émis et une station (R) de réponse par laquelle, après réception d'un signal d'interrogation, est émis un signal de réponse, auquel est imprimé un mot de code qui sert à l'identification de la station (R) de réponse et qui est décodé dans la station (Q) d'interrogation après la démodulation du signal de réponse, au moins la station (R) de réponse comportant une ligne (OFW) de temporisation qui est munie d'un substrat convenant au guidage d'ondes de surface et qui est munie de points (IDW, IDWa, ..., IDWd; RFT) de réflexion, dont au moins un point (IDW) de réflexion est utilisé pour injecter des signaux d'interrogation et au moins un point (IDW, IDWa, ..., IDWd) de réflexion est utilisé pour le découplage des signaux de réponse qui sont retransmis à la station (Q) d'interrogation sous la forme d'une séquence d'impulsions et qui y sont démodulés et décodés, **caractérisé en ce que** les signaux d'interrogation envoyés à la station (R) de réponse sont modulés en phase ou en fréquence et **en ce qu'**il est envoyé à la station (R) de réponse des données (vd-b) variables qui sont imprimées dans le signal de réponse en plus du mot de code, si bien que l'on obtient, outre une première voie de données pour la transmission de mots de code affectés de manière fixe, une deuxième voie de données pour la transmission de données (vd-b) variables.

2. Procédé suivant la revendication 1, **caractérisé en ce que** la séquence d'impulsions retransmise à la station (Q) d'interrogation est codée ou modulée dans la station (R) de réponse en fonction des données (vd-b) à transmettre à la station (Q) d'interrogation.

3. Procédé suivant la revendication 2, **caractérisé en ce que** la séquence d'impulsions découplée sur la ligne (OFW) de temporisation est modulée en phase en fonction des données (vd-b) à transmettre dans un modulateur (PM) et retransmise à la station (Q) d'interrogation, toutes les impulsions ou seulement des impulsions individuelles de la séquence d'impulsions découplées de la ligne (OFW) de temporisation étant modulées en phase et des impulsions non modulées étant utilisées éventuellement comme référence pour la démodulation de la séquence d'impulsions transmise.

4. Procédé suivant la revendication 2 ou 3, **caractérisé en ce que** le comportement de réflexion d'au moins l'un des points (RFT; IDWa, ..., IDWd) de réflexion prévus sur la ligne (OFW) de temporisation est influencé par la connexion d'une impédance (IMP1, ..., IMP5; SW1, ..., SWn; IMPC-I) réelle ou complexe ou par la variation d'une impédance (IMP1, ..., IMP5; SW1, ..., SWn; IMPC-I) réelle ou complexe connectée, en fonction des données (vd-b) à transmettre, de telle manière qu'il est fourni, comme réponse à un signal d'interrogation, une séquence d'impulsions de même intensité ou d'intensité différente.

5. Procédé suivant l'une des revendications 1 à 4, **caractérisé en ce que**
a) on utilise pour la transmission de données entre la station (Q) d'interrogation et la station (R) de réponse des impulsions d'interrogation expansées à fréquence porteuse, dont la direction d'expansion est choisie de telle manière que l'expansion s'effectue pour un bit "1" de données à transmettre d'une fréquence f1 vers une fréquence f2 et que l'expansion s'effectue pour un bit "0" de données à transmettre de la fréquence f2 vers la fréquence f1, ou **en ce que**
b) l'impulsion expansée est subdivisée en plusieurs régions (B1, ..., Bn) dont l'une au moins est repérée en fonction des données (vd-b) variables à transmettre, **en ce que** l'impulsion expansée est, pour le repérage des régions (B1, ..., Bn), modulée en amplitude ou en phase sur les positions correspondantes et **en ce que** les signaux sont décodés après la transmission.

6. Système de transmission pour la transmission de données entre une station (Q) d'interrogation dont des signaux d'interrogation peuvent être émis et une station (R) de réponse dont il peut être émis, après réception d'un signal d'interrogation, un signal de réponse auquel peut être imprimé un mot de code qui sert à l'identification de la station (R) de réponse et qui peut être décodé dans la station (Q) d'interrogation après la démodulation du signal de réponse, au moins la station (R) de réponse comportant une ligne (OFW) de temporisation qui est munie d'un substrat convenant au guidage d'ondes de surface et qui est munie de points (IDW; IDWa, ..., IDWd; RFT) de réflexion dont au moins un point (IDW) de réflexion peut être utilisé pour injecter des signaux d'interrogation et dont au moins un point (IDW, IDWa, ..., IDWd) de réflexion peut être utilisé pour découpler des signaux de réponse qui peuvent être retransmis sous la forme d'une séquence d'impulsions à la station (Q) d'interrogation et qui peuvent y être démodulés et décodés, **caractérisé en ce que** les signaux d'interrogation envoyés à la station (R) de réponse sont modulés en phase ou en fréquence et **en ce qu'**il est envoyé à la station (R) de réponse des données (vd-b) variables qui peuvent être imprimées dans le signal de réponse en plus du mot de code, si bien qu'il est présent, outre une première voie de données pour la transmission de mots de code affectés de manière fixe, une deuxième voie de données pour la transmission de données (vd-b) variables.

7. Système de transmission suivant la revendication 6, **caractérisé en ce que** la séquence d'impulsions retransmise à la station (Q) d'interrogation peut être codée ou modulée dans la station (R) de réponse en fonction des données (vd-b) transmises à la station (Q) d'interrogation.

8. Système de transmission suivant la revendication 7, **caractérisé en ce que** la séquence d'impulsions découplée sur la ligne (OFW) de temporisation peut être modulée en phase dans un modulateur (PM) en fonction des données (vd-b) à transmettre et peut être retransmise à la station (Q) d'interrogation, toutes les impulsions ou seulement des impulsions individuelles de la séquence d'impulsion découplées sur la ligne (OFW) de temporisation pouvant être modulées en phase et des impulsions non modulées pouvant être utilisées le cas échéant comme référence pour la démodulation de la séquence d'impulsions transmise.

9. Système de transmission suivant la revendication 7 ou 8, **caractérisé en ce que** le comportement de réflexion d'au moins l'un des points (RFT; IDWa, ..., IDWd) de réflexion prévus sur la ligne (OFW) de temporisation peut être influencée par connexion d'une impédance (IMP1, ..., IMP5; SW1, ..., SWn; IMPC-I) réelle ou complexe ou par variation d'une impédance (IMP1, ..., IMP5; SW1, ..., SWn; IMPC-I) réelle ou complexe qui peut être connectée, en fonction des données (vd-b) variables à transmettre, de telle manière qu'il peut être fourni, comme réponse à un signal d'interrogation, une séquence d'impulsions de même intensité ou d'intensité différente.

10. Système de transmission suivant l'une des revendications 6 à 9, **caractérisé en ce que**
a) on utilise pour la transmission de données entre la station (Q) d'interrogation et la station (R) de réponse des impulsions d'interrogation expansées à fréquence porteuse, dont la direction d'expansion est choisie de telle manière que l'expansion s'effectue pour un bit "1" de données à transmettre d'une fréquence f1 vers une fréquence f2 et l'expansion s'effectue pour un bit "0" de données à transmettre de la fréquence f2 vers la fréquence f1, ou **en ce que**
b) l'impulsion expansée peut être subdivisée en plusieurs régions (B1, ..., Bn) dont l'une au moins peut être repérée en fonction des données à transmettre, **en ce que**, pour repérer les régions (B1,..., Bn), l'impulsion expansée est modulée en amplitude ou en phase sur les positions correspondantes et **en ce que** les signaux peuvent être décodés après la transmission.
